# EUROPÄISCHE PATENTSCHRIFT

(11) **EP 3 099 544 B1**
(45) Veröffentlichungstag und Bekanntmachung des Hinweises auf die Patenterteilung: **10.06.2020**
(21) Anmeldenummer: 15702956.2
(22) Anmeldetag: 07.01.2015
(51) Int. Cl.: B60R 25/24, G07C 9/00

(54) **MONTAGEMODUL FÜR EIN KRAFTFAHRZEUG**
ASSEMBLY MODULE FOR A MOTOR VEHICLE
MODULE PRÊT AU MONTAGE POUR VÉHICULE À MOTEUR

(30) Priorität: 31.01.2014 DE 102014101204
(43) Veröffentlichungstag der Anmeldung: 07.12.2016
(73) Patentinhaber: Huf Hülsbeck & Fürst GmbH & Co. KG, 42551 Velbert (DE)
(72) Erfinder: SCHINDLER, Mirko, 42549 Velbert (DE); STICHERLING, Nadine, 45257 Essen (DE); MÖNIG, Stefan, 58332 Schwelm (DE); SCHUMACHER, Helmut, 48653 Coesfeld (DE); ZIEGLER, Alexander, 42489 Wülfrath (DE); LINDIC, Iko, 45149 Essen (DE); HACHE, Christof, 42551 Velbert (DE); MÜLLER, Oliver, 42551 Velbert (DE); HELLER, Norbert, 47929 Grefrath (DE); YOMKIL MALABO, Jean, 45139 Essen (DE); ETTE, Bernd, 38442 Wolfsburg (DE)
(74) Vertreter: Patentanwälte Bals & Vogel
(86) Internationale Anmeldenummer: PCT/DE2015/100005
(87) Internationale Veröffentlichungsnummer: WO 2015/113551

(56) Entgegenhaltungen:
- WO-A1-2013/037806
- DE-A1-102007 050 094
- DE-A1-102009 023 594
- DE-A1-102010 056 171
- DE-A1-102011 115 760
- DE-B3-102005 032 402
- US-A1- 2003 160 154

## Beschreibung

Die vorliegende Erfindung betrifft ein Montagemodul für ein Kraftfahrzeug sowie ein Verfahren für das Auslösen eines Signals für die Durchführung einer Aktion an einem Kraftfahrzeug.

Es ist bekannt, dass bei Fahrzeugen eine Umgebungsüberwachung durchgeführt werden kann, um Aktionen beim Fahrzeug auszuführen. Beispielsweise sind sog. "Keyless Entry"- und "Keyless Go"- Funktionen bei Fahrzeugen im Einsatz. Dabei wird z. B., über eine Funküberwachung erkannt, wenn sich ein entsprechender Funkschlüssel, z. B. in der Hosentasche eines Benutzers, in der Nähe des Fahrzeugs befindet. Anschließend kann als Aktion eine Authentifizierung durchgeführt werden, bei welcher über eine Abfrage die Übereinstimmung des Schlüssels mit dem Fahrzeug festgestellt werden kann.

Anschließend kann das Fahrzeug geöffnet oder verschlossen werden. Auch andere Methoden der Überwachung, z. B. in kapazitiver Weise, sind bekannt. So ist es beispielsweise möglich das Eingreifen des Benutzers mit seiner Hand in einen Türgriff über kapazitive Sensoren festzustellen. Auch dies kann eine Aktion auslösen, z. B. die Authentifizierung des Benutzers anhand seines am Körper getragenen Funkschlüssels.

In der DE 10 2005 032 402 B3 ist eine Vorrichtung und ein Verfahren gezeigt zum optischen Überwachen eines Detektionsbereiches und Auslösen einer Aktion in einem Betätigungsbereich.

Nachteilig bei bekannten Lösungen ist es, dass diese immer eine aktive Auslösung bzw. einen aktiven Start erfordern. So wird beispielsweise durch den kapazitiven Sensor die Authentifizierung erst dann ausgelöst, wenn der Benutzer tatsächlich nach dem Fahrzeuggriff greift. Gleiches gilt für ein automatisches Öffnen der Heckklappe, welches erst öffnet, wenn der Benutzer eine entsprechende ausreichende Nähe zum Fahrzeug und einem entsprechenden Sensorsystem aufweist. Darüber hinaus sind bekannte Verfahren nicht ausreichend sensitiv, sodass grundsätzlich das Risiko einer Fehlinterpretation einer Geste oder eines Benutzers besteht.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise ein Risiko einer Fehlauslösung eines entsprechenden Signals zur Durchführung einer Aktion am Kraftfahrzeug zu reduzieren oder gänzlich zu vermeiden.

Voranstehende Aufgabe wird gelöst durch ein Montagemodul mit den Merkmalen des Anspruchs 1 sowie ein Verfahren mit den Merkmalen des unabhängigen Verfahrensanspruchs . Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Montagemodul beschrieben sind, selbstverständlich auch im Zusammenhang mit dem erfindungsgemäßen Verfahren und jeweils umgekehrt, sodass bzgl. der Offenbarung zu den einzelnen Erfindungsaspekten stets wechselseitig Bezug genommen wird bzw. werden kann.

Ein erfindungsgemäßes Montagemodul für ein Kraftfahrzeug weist ein optisches Sensorsystem auf, welches geeignet ist,
a) einen außerhalb des Kraftfahrzeugs liegenden Detektionsbereich zu überwachen, um die Nähe eines Benutzers festzustellen,
b) im Falle des Erkennens des Benutzers im einem Detektionsbereich einen innerhalb des Detektionsbereichs angeordneten Betätigungsbereich zu überwachen, um festzustellen, ob der Benutzer sich innerhalb eines Betätigungsbereichs befindet, und
c) im Falle eines Erkennens des Benutzers in einem Betätigungsbereich ein Signal für die Durchführung einer Aktion am Kraftfahrzeug auszulösen.

Erfindungsgemäß ist es nun also möglich, ein zweistufiges Verfahren mit einem erfindungsgemäßen Montagemodul durchzuführen. Dies führt dazu, dass unterschiedliche Funktionalitäten in den entsprechenden Einheiten einer Kontrollvorrichtung des optischen Sensorsystems implementiert werden können. Für die Ausführung des ersten Schritts, nämlich die im wesentlichen kontinuierliche Überwachung des außerhalb des Kraftfahrzeugs liegenden Detektionsbereich ist es dabei vorgesehen, besonders kleine und energiearme jedoch für den Dauerbetrieb einsetzbare Sende- bzw. Überwachungseinheiten einzusetzen. Zum Beispiel können hier einfache Fotosensoren verwendet werden, welche kostengünstig, klein und vor allem mit geringem Energiebedarf betrieben werden können.

Nur für den Fall, dass ein Benutzer innerhalb dieses permanent überwachten Detektionsbereich erkannt wird, wird nun als zweite Stufe eines entsprechenden Prozesses eine Auswertung hinsichtlich der tatsächlichen Positionierung des Benutzers relativ zu einem Betätigungsbereich durchgeführt. Hierfür kann das optische Sensorsystem in einer entsprechenden Kontrollvorrichtung eine zweite Überwachungseinheit, z. B. für die Aussendung und den Empfang von Laserlichtblitzen und deren Reflektion, aufweisen.

Dadurch, dass ein erfindungsgemäßes Montagemodul ausgebildet ist für die Mehrstufigkeit, insbesondere für eine Zweistufigkeit, kann nun dieser zweite Verfahrensschritt selektiv erfolgen. Mit anderen Worten muss dieser zweite Ausführungsschritt nun nicht mehr permanent durchgeführt werden, weshalb die entsprechende Einheit innerhalb des optischen Sensorsystems auch mit höherem Energiebedarf ausgebildet ist. Dies beruht auf der Tatsache, dass dieser hohe Energiebedarf nur dann eingesetzt wird, wenn er auch mit hoher Wahrscheinlichkeit benötigt wird und zum Erkennen eines Benutzers innerhalb eines Bestätigungsbereichs führen kann.

Durch den Kern der vorliegenden Erfindung wird also ein zweistufiges Erkennungsverfahren mit einem erfindungsgemäßen Montagemodul möglich. Dies führt dazu, zum Einen mit reduzierter Fehlerwahrscheinlichkeit das gewünschte Signal für das Ausführen einer Aktion am Kraftfahrzeug auszulösen. Andererseits wird jedoch der notwendige Detaillierungsgrad für die relative Positionsbestimmung des Benutzers korreliert mit dem Betätigungsbereich dann notwendig, wenn sich der Benutzer in dem größeren Detektionsbereich befindet.

Insbesondere wird bei einem Montagemodul bzw. bei dem entsprechenden Verfahren zusätzlich die später noch beschriebene Authentifizierungsprüfung durchgeführt. Mit anderen Worten wird vor der Durchführung des Schrittes b) ein zusätzlicher Verifikationsschritt durchgeführt, ob der hohe Energieaufwand für die Bestimmung des Benutzers relativ zum Betätigungsbereich sich hier auch tatsächlich lohnt. Zusammengefasst kann ein Montagemodul zielgenauer die Funktion mit einzelnen Verfahrensstufen zur Verfügung stellen. So kann für die Überwachung des Detektionsbereichs ein einfaches, kostengünstiges und für den Dauer-Einsatz betreibbares Sensormodul bzw. eine Sensoreinheit zum Einsatz kommen. Für den zweiten Schritt, nämlich die Relativpositionsbestimmung des Benutzers korreliert zum Betätigungsbereich kann ein entsprechend aufwendiger und vor allem auch mit höherem Energiebedarf betreibbarer Sensor für das optische Sensorsystem eingesetzt werden. Ferner kann das Montagemodul am Kraftfahrzeug befestigt sein. Unter einem optischen Sensorsystem ist ein System zu verstehen, welches ein oder mehrere Sensoreinheiten aufweist. Mit diesen kann in optischer Weise eine Überwachung des Detektionsbereichs erfolgen. Beispielsweise kann das Sensorsystem einen Fotosensor aufweisen, welcher über einzelnen fotosensitive Pixel verfügt. Damit kann ein Abbild, insbesondere ein zweidimensionales Abbild, des Detektionsbereichs zur Verfügung gestellt werden und Veränderungen der einzelnen Pixel einer Überwachung auf einen in den Detektionsbereich eintretenden Benutzer zugrunde gelegt werden. Mit anderen Worten wird nun rein optisch und vor allem kontinuierlich die Überwachung des Detektionsbereichs möglich.

Ein Detektionsbereich ist im Sinne der vorliegenden Erfindung ein Bereich neben bzw. außerhalb des Fahrzeugs, welcher mit hoher Wahrscheinlichkeit eine gewünschte nachfolgende Aktion durch den Benutzer vermuten lässt. Beispielsweise kann ein derartiger Detektionsbereich hinter dem Fahrzeug angeordnet sein und auf eine Aktion mit Bezug zur Heckklappe, z. B. den Öffnungswunsch der Heckklappe, schließen lassen. Weiter ist es möglich, dass ein entsprechender Detektionsbereich neben dem Fahrzeug, z. B. im Bereich der Fahrertüre oder der rückwärtigen Türen, insbesondere im Bereich einer Schiebetür ausgebildet ist. In einem solchen Fall würde das Eintreten des Benutzers in diesen Detektionsbereich mit hoher Wahrscheinlichkeit auf einen Betätigungswunsch der entsprechenden Tür schließen lassen.

Es kann unterschieden werden zwischen dem Detektionsbereich und dem Betätigungsbereich. Der Betätigungsbereich ist dabei innerhalb des Detektionsbereichs angeordnet und vorzugsweise kleiner insbesondere deutlich kleiner ausgebildet als der Detektionsbereich. Somit kann von einem im Wesentlichen zweistufigen Erkennen ausgegangen werden. Erfindungsgemäß erfolgt die Überwachung des Detektionsbereichs kontinuierlich und damit ständig. Damit wird erkannt, wenn ein Benutzer in den Detektionsbereich eintritt. Zu diesem Zeitpunkt und vorzugsweise auch erst nach diesem Zeitpunkt, erfolgt eine Überwachung auf den kleineren Betätigungsbereich innerhalb des Detektionsbereichs. Mit anderen Worten befindet sich das optische Sensorsystem in einer grundsätzlichen Überwachungsfunktionalität hinsichtlich des Detektionsbereichs. Dabei oder in Abhängigkeit vom Eintreten des Benutzers in den Detektionsbereich kann ein Laserlichtblitz ausgesendet werden, um eine Korrelation mit dem vordefinierten Betätigungsbereich zu erlauben.

Befindet sich das Montagemodul z. B. im Heckbereich des Fahrzeugs, so dient es dazu den Öffnungswunsch für ein automatisches Öffnen der Heckklappe als entsprechendes Signal auszulösen. Hierfür findet in kontinuierlicher Weise eine Überwachung des hinter dem Kraftfahrzeug liegenden Detektionsbereichs statt. Tritt der Benutzer nun in diesen Detektionsbereich ein, so wird dies erkannt und es kann z. B. vorangehend ein Authentifizierungsschritt stattfinden. Wird der Benutzer aufgrund eines vorhandenen Funkschlüssels z. B. in seiner Hosentasche als authentifizierter Benutzer bestätigt, kann aktiv oder passiv nun eine Überwachung des Betätigungsbereichs erfolgen. Wird innerhalb des Betätigungsbereichs der Benutzer oder ein Körperteil des Benutzers festgestellt, so erfolgt das Auslösen des Signals für die Durchführung der Aktion am Kraftfahrzeug, nämlich das automatische Öffnen der Heckklappe. Mit anderen Worten tritt der Benutzer zuerst in den Detektionsbereich ein und muss anschließend sich selbst oder ein Körperteil von sich selbst in den Betätigungsbereich bewegen, um dort mit Hilfe des Laserlichtblitzes in dreidimensionaler Informationsstruktur das gewünschte Signal zur Durchführung der Aktion am Kraftfahrzeug auszulösen.

Es kann vorgesehen sein, das optische Sensorsystem oder das gesamte Montagemodul zur Anordnung am Fahrzeugheck, z. B. hinter der Heckscheibe, in eine Griffleiste, in ein Emblem, in eine Rückleuchte, hinter ein Katzenauge, an einen Stoßfänger und/oder in einem Spalt zwischen zwei Komponenten, ausgebildet ist. Alternativ oder zusätzlich kann das Montagemodul geeignet sein, an einer Fahrzeugseite z. B. in einer B-Säule befestigt zu werden. Hierdurch können unterschiedliche Detektionsbereiche, in denen sich üblicher Weise ein Benutzer dem Kraftfahrzeug annähert, mit dem optischen Sensorsystem überwacht werden. Insbesondere kann das optische Sensorsystem oder das gesamte Montagemodul hinter einer von außen undurchsichtigen Schicht verdeckt sein, die jedoch für das Licht des optischen Sensorsystems lichtdurchlässig ist. So kann z. B. der Stoßfänger, an dem das optische Sensorsystem montiert ist, lackiert sein.

Bevorzugt ist das optische Sensorsystem derart am Kraftfahrzeug angeordnet, dass es wenig verschmutzt. Z. B. kann das optische Sensorsystem hinter der Heckscheibe im Wischbereich des Scheibenwischers oder an der Griffleiste angeordnet sein. Alternativ oder zusätzlich kann das Montagemodul eine Waschdüse aufweisen, mit der das optische Sensorsystem gesäubert werden kann. Die Waschdüse kann hierbei z. B. immer dann automatisch das optische Sensorsystem reinigen, wenn auch der Scheibenwischer der Front- und/oder Heckscheibe betätigt wird. Ein sauberes optisches Sensorsystem benötigt eine geringere Lichtintensität zum Funktionieren, so dass auch hierdurch Energie gespart werden kann.

Die Intensität des emittierten Lichts kann von der Helligkeit des Umgebungslichts abhängen. Die Helligkeit des Umgebungslichts kann durch einen Helligkeitssensor ermittelt werden.

Können bei der Überwachung des Betätigungsbereichs verschiedene Benutzerwillen festgestellt werden, so können verschiedenen Gesten verschiedene Benutzerwillen zugeordnet werden. So kann z. B. mit dem Fuß in den Betätigungsbereich treten ein Öffnen der Heckklappe verursachen, während eine seitliche Bewegung einer Hand nahe dem optischen Sensor ein Ausfahren der Anhängerkupplung bewirkt.

Es ist denkbar, dass ein Entfernen des Objekts innerhalb einer vorgegebenen Entfernungsdauer aus dem Betätigungsbereich erfolgen muss, damit das Signal bereitgestellt wird. Das Entfernen eines Objektes innerhalb einer vorgegebenen Entfernungsdauer kann Teil der Geste sein. Der Beginn der Entfernungsdauer ist für den Benutzer wahrnehmbar. So kann z. B. ein Anzeigeelement mehrere Beleuchtungszustände einnehmen. In einem der Beleuchtungszustände kann ein solches Anzeigeelement Licht einer konstanten Helligkeit emittieren. In einem anderen Beleuchtungszustand kann z. B. die Helligkeit sich periodisch ändern. So kann z. B. der Beginn der Betätigungsdauer das Anzeigeelement Licht konstanter Helligkeit emittieren. Während der Entfernungsdauer kann das Anzeigeelement z. B. blinken. Nur wenn das Objekt, insbesondere ein Körperteil des Benutzers, innerhalb der Entfernungsdauer aus dem Betätigungsbereich entfernt wird, wird das Signal bereitgestellt.

Es kann vorgesehen sein, dass das Montagemodul und/oder Kraftfahrzeug zumindest ein Mittel aufweist, das es dem Benutzer erleichtert, den Benutzerwillen im Betätigungsbereich kund zu tun, so dass das Signal ausgelöst wird.

So kann das Montagemodul ein Hinweissignal aussenden, dass die Betätigungsdauer in Kürze enden wird. Das Hinweissignal kann z. B. durch einen Wechsel des Beleuchtungszustands des Anzeigeelements beginnen. Das Hinweissignal kann einem anderen Beleuchtungszustand des Anzeigeelements entsprechen. Z. B. kann zum Ende der Betätigungsdauer das Anzeigeelement blinken. Das Mittel entspricht einer entsprechenden Verfahrensvorgabe in der Überwachungseinheit.

Ebenfalls kann es für den Benutzer zum Kundtun seines Benutzerwillens hilfreich sein, wenn der Benutzer zu dem Betätigungsbereich geleitet wird. Dieses ist insbesondere der Fall, wenn der Benutzer durch Tragen eines großen Gegenstandes die Endfläche des Betätigungsbereichs auf der Bodenfläche nicht wahrnehmen kann. Hierzu kann das Montagemodul und/oder das Kraftfahrzeug Mittel aufweisen, durch die für den Benutzer ein wahrnehmbares, insbesondere sehbares, hörbares oder fühlbares, Signal erzeugt werden kann. So kann beispielsweise das Montagemodul Leuchtelemente, z. B. LEDs, aufweisen. Die Leuchtelemente können so angeordnet sein, dass die Leuchtelemente als Wegweiser wirken. Beispielsweise können die Leuchtelemente derart ausgerichtet sein, dass sie Markierungen auf der Bodenfläche erzeugen, die zum Betätigungsbereich hinführen. Zusätzlich oder alternativ können die Leuchtelemente nebeneinander angeordnet sein. Die Leuchtelemente können in einer Reihenfolge angeschaltet werden, die dem Benutzer zeigt, in welche Richtung der Benutzer sich auf den Betätigungsbereich zubewegen muss. Anstelle der Leuchtelemente können hierfür auch vorhandene, nebeneinander im Kraftfahrzeug angeordnete Lichtelemente, z. B. die Leuchtelemente eines Scheinwerfers, einer Bremsleuchte, Blinker oder dergleichen, verwendet werden. Ebenfalls ist es denkbar, dem Benutzer akustisch hörbar eine Anleitung zu geben, in welche Richtung der Benutzer sich bewegen muss. Hierzu kann das Montagemodul einen Lautsprecher aufweisen. Ebenfalls ist es denkbar, die Richtungsänderung dem ID-Geber mitzuteilen, der durch verschiedene Vibrationen dem Benutzer den Weg weist. Wird dem Benutzer eine Richtungsänderung mitgeteilt, so ermittelt das optische Sensorsystem die Position des Benutzers und die Richtung, in die er sich zu dem Betätigungsbereich bewegen muss, und veranlasst das wahrnehmbare Mittel, das entsprechende Signal auszusenden.

Ebenfalls kann es für den Benutzer hilfreich sein, dass die Position des Betätigungsbereichs und/oder die Länge der Betätigungsdauer veränderbar ist. Dieses ist insbesondere hilfreich, wenn ein körperlich beeinträchtigter Benutzer seinen Benutzerwillen kund tun möchte. Ebenfalls ist dieses hilfreich, wenn der Betätigungsbereich an einer für den Benutzer ungünstigen Position angeordnet ist. Die ungünstige Position kann hierbei dauerhaft sein. Z. B. kann der Betätigungsbereich auf einer Anhängerkupplung enden. Alternativ kann die ungünstige Position nur für ein Auslösen eines einmaligen Arbeitssignals ungünstig sein, z. B. weil der Betätigungsbereich an einer Pfütze endet. Um die Position des Betätigungsbereichs und/oder die Länge der Betätigungsdauer zu ändern, kann insbesondere eine vordefinierte Benutzerhandlung vorgesehen sein. So kann z. B. der Benutzer die Position des Betätigungsbereichs und/oder Länge der Betätigungsdauer durch eine Eingabe in einem Benutzermenü, z. B. eines KFZ-Steuergeräts oder eines ID-Gebers, ändern. Alternativ kann die vordefinierte Benutzerhandlung vom optischen Sensorsystem erkannt werden. In einer weiteren Alternative kann das Montagemodul in einen Lernmodus überführt werden, in dem das Montagemodul die geänderte Position des Betätigungsbereichs und/oder die geänderte Länge des Betätigungsbereichs lernt.

Ebenfalls kann es für den Benutzer hilfreich sein, dass der Betätigungsbereich erneut überwacht ist, um einen Benutzerwillen zum Auslösen eines Arbeitssignals festzustellen, nachdem eine erste Betätigungsdauer ohne Erkennen eines Benutzerwillens beendet ist. Dieses ist insbesondere hilfreich, wenn der Benutzer abgelenkt war und den Betätigungsbereich nicht rechtzeitig erreicht hat oder die falsche Geste durchgeführt hat. Daher kann vorgesehen sein, dass der Betätigungsbereich mehrmals, insbesondere zwei-oder dreimal, hintereinander überwachbar ist. Das erneute Überwachen des Betätigungsbereichs kann automatisch eingeleitet werden. Alternativ kann eine vordefinierte Benutzerhandlung vorgesehen sein, um den Betätigungsbereich erneut für eine weitere Betätigungsdauer zu überwachen. Hierzu kann beispielsweise ein kapazitiver Sensor von dem Benutzer angesprochen werden. Alternativ kann es sich um eine vordefinierte Benutzerhandlung handeln, die vom optischen Sensorsystem erkannt wird.

Bei der vordefinierten Benutzerhandlung, die vom optischen Sensorsystem erkannt wird und die eine Änderung der Position des Betätigungsbereichs und/oder der Betätigungsdauer und/oder eine erneute Überwachung des Betätigungsbereichs zum Erkennen eines Benutzerwillens veranlasst, kann es sich beispielhaft um folgende Benutzerhandlungen handeln: eine vorgegebene Gestik innerhalb des Betätigungs- und/oder Detektionsbereichs, beispielsweise ein Hin- und Herbewegen eines Körperteils des Benutzers, ein Nicht-Entfernen des Körperteils, sofern ein Entfernen vorgesehen war, eine Bewegung des Benutzers in den Detektions- und/oder Betätigungsbereich und/oder aus dem Detektions-und/oder Betätigungsbereich. Insbesondere kann der Körperteil eine Hand oder ein Fuß sein. Weiter kann vorgesehen sein, dass der Benutzer den Detektionsbereich für eine vorgegebene Zeit verlässt und sich dann wieder in den Detektionsbereich begibt.

Wird der Betätigungsbereich erneut zum Feststellen eines Benutzerwillens überwacht, so zeigt auch das Anzeigeelement dieses an. Wird die Position des Betätigungsbereichs verändert, so zeigt das Anzeigeelement dieses an. Hierzu kann das Anzeigeelement mehrere Leuchtmittel, z. B. LEDs, auf. Jeweils ein oder mehrere Leuchtmittel machen jeweils einen Betätigungsbereich zumindest teilweise sichtbar. Vorzugsweise liegt der Betätigungsbereich mit der geänderten Position innerhalb des Detektionsbereichs. Je nachdem welcher Betätigungsbereich überwacht wird, werden die entsprechenden Pixel ausgewertet.
Es kann sein, dass eine Position des ID-Gebers während oder nach einer Authentifizierung und vor Auslösen des Signals überprüft wird. Hierzu kann die Stärke eines von einem ID-Geber ausgesendeten Signals verwendet werden. Beispielsweise kann der Receive Signal Strength Indicator (RSSI) hierzu verwendet werden. Durch die Ermittlung der Stärke des ausgesendeten Signals kann z. B. festgestellt werden, ob sich der Benutzer vor, neben oder hinter dem Kraftfahrzeug befindet. Hierdurch kann sichergestellt werden, dass nur der berechtigte Benutzer selber in den Detektionsbereich gelangt ist und seinen Benutzerwillen im Betätigungsbereich kundgetan hat. Es ist denkbar, den RSSI zyklisch abzufragen.

Es ist vorgesehen, dass bei einem Montagemodul das optische Sensorsystem ausgebildet ist für die Überwachung des Detektionsbereichs weniger Energie aufzuwenden, als für die Überwachung des Betätigungsbereichs. Hierfür kann das optische Sensorsystem eine Kontrollvorrichtung aufweisen, welche mit einer Detektionseinheit für die Überwachung des Detektionsbereichs ausgebildet ist. Weiter können eine Sendeeinheit und eine Empfangseinheit für die Überwachung des Betätigungsbereichs vorgesehen sein. Kern bei dieser Ausführungsform ist der Unterschied im Energiebedarf bei der Durchführung des jeweiligen Verfahrensschrittes. Wie bereits erläutert worden ist, kann für die permanente Überwachung bei der Überwachung des Detektionsbereichs nun ein reduzierter Energiebedarf eine Schonung der Batterie des Fahrzeugs mit sich bringen. Für die notwendige Detailbestimmung bzw. Feinpositionierung des Benutzers relativ zum Betätigungsbereich kann ein erhöhter Energiebedarf eingesetzt werden, da dieser nur in Einzelsituationen und zwar in Abhängigkeit von der tatsächlichen Positionierung des Benutzers relativ zum Detektionsbereich vorgenommen werden muss.

Ein Montagemodul kann dahingehend weitergebildet sein, dass das optische Sensorsystem ausgebildet ist für die Überwachung des Betätigungsbereichs innerhalb des Detektionsbereichs einen Laserlichtblitz auszusenden und die Reflexion des Laserlichtblitzes von einem Benutzer zu erkennen.

Es ist bei dieser Ausführungsform das Verwenden eines Laserlichtblitzes für die zusätzlich Erkennung einer Abstandsinformation zum Benutzer wesentlich. Dabei kann gemäß der vorliegenden Erfindung nun der Laserlichtblitz dazu verwendet werden, durch das Erkennen seiner Reflexion eine dreidimensionale Information zu erhalten. Während das einfache optische Sensorsystem, z. B. mit Hilfe eines Fotosensors ausgestattet ist, kann der Laserlichtblitz zusätzlich zur zweidimensionalen Information eines solchen Fotosensors eine dreidimensionale Abstandsinformation hinzufügen. Damit wird es möglich den Detektionsbereich bzw. insbesondere den Betätigungsbereich hinsichtlich seines Abstands zum Fahrzeug bzw. dem Montagemodul zu definieren.

Durch die Verwendung eines Laserlichtblitzes ist es möglich die beschriebene 3D-Information zu erhalten. Dabei kann z. B. ein sog. "Time of Flight"-Verfahren (TOF) eingesetzt werden. Es wird dabei die Zeit bestimmt, welche zwischen dem Aussenden des Laserlichtblitzes und dem Empfangen der Reflexion des Laserlichtblitzes vergangen ist. Über eine Korrelation mit der Lichtgeschwindigkeit kann über diese Zeitdifferenz eine Abstandsberechnung bzw. eine Abstandsbestimmung stattfinden. Dies führt dazu, dass nunmehr nicht mehr nur grundsätzlich eine Erkennung des entsprechenden Benutzers innerhalb des Detektionsbereichs bzw. innerhalb des Betätigungsbereichs erfolgen kann, sondern dies mit der Abstandsinformation korreliert wird.

Bezogen auf den Detektionsbereich und den Betätigungsbereich führt das Verwenden eines Laserlichtblitzes dazu, dass nun diese Bereiche nicht mehr nur zweidimensional als Fläche außerhalb des Fahrzeugs ausgebildet sein können, sondern der Detektionsbereich und der Betätigungsbereich auch als Detektionsvolumen bzw. Betätigungsvolumen ausgebildet sein können. Dabei ist darauf hinzuweisen, dass selbstverständlich eine Erstreckung vom Boden bis zu einer maximalen Höhe sowohl für den Detektionsbereich als Volumen, als auch für den Betätigungsbereich als Volumen möglich ist. Jedoch kann es auch vorteilhaft sein, wenn zwei oder mehr Abstandsgrenzen vorgegeben werden, welche nun sozusagen einen schwebenden Detektionsbereich oder einen schwebenden Betätigungsbereich jeweils als Volumen definieren lassen. Damit wird sichergestellt, dass ein unerwünschtes Stehen innerhalb des Betätigungsbereichs nicht zu einer möglicherweise unerwünschten Auslösung der Aktion durch das Auslösen des Signals führt. Somit können Gesten noch eindeutiger erkannt und vordefiniert werden und von anderen Gesten, welche die Aktion nicht auslösen sollen, unterschieden werden. Nachfolgend soll kurz an einem Beispiel ein erfindungsgemäßes Verfahren bzw. ein erfindungsgemäßes Montagemodul in seiner Wirkungsweise erläutert werden.

Es wird nun eine deutlich höhere Sicherheit für die Durchführung des Verfahrens bzw. für die Ausbildung des Montagemoduls erzielt. Während bei bekannten Lösungen möglicherweise noch eine Fehlöffnung entstehen könnte, beispielsweise wenn sich der Benutzer des Fahrzeugs mit seinem Funkschlüssel hinter dem Fahrzeug aufhält, jedoch keinen Öffnungswunsch für die Heckklappe hegt. In einem solchen Fall könnte es passieren, dass sich der Benutzer durch Zufall in den Betätigungsbereich bewegt und dort dann in unerwünschter Weise ein Öffnungswunsch bzw. der Auslösewunsch für die Aktion detektiert wird. Durch das Verwenden des Laserlichtblitzes ist es nun möglich, dass eine 3D-Information eine deutlich stärkere Einschränkung des Betätigungsbereichs insbesondere dessen Höhe erlaubt. Damit wird eine verbesserte Unterscheidbarkeit unterschiedlicher Gesten möglich, welche nunmehr das Risiko der beschriebenen Fehlauslösung deutlich reduzieren.

Ein weiterer Vorteil dieses Montagemoduls ist es, dass mit Hilfe des Laserlichtblitzes die Feinbestimmung hinsichtlich der dreidimensionalen Information nur mit Bezug auf den Betätigungsbereich notwendig ist. Somit wird es durch ein Montagemodul möglich, ein zweistufiges Verfahren zu implementieren, bei welchem der Laserlichtblitz für den vordefinierten Betätigungsbereich, insbesondere nicht kontinuierlich, sondern nur beim Erkennen des Benutzers innerhalb des Detektionsbereichs zum Einsatz kommt.

Unter einem Laserlichtblitz ist im Sinne der vorliegenden Erfindung jede Form von Wellenlängen zu verstehen, welcher unter dem Begriff eines Laserlichts fällt. Ein Blitz für das Laserlicht wird dann ausgebildet, wenn das Laserlicht nicht kontinuierlich, sondern nur für eine sehr kurze Zeitspanne von weniger als vorzugsweise ca. einer Sekunde ausgesendet wird. Bevorzugt erfolgt das Aussenden des Laserlichtblitzes sogar mehrfach, sodass auch von einem gepulsten Laserlichtblitz gesprochen werden kann. Auch hierzu wird später noch mehr erläutert.

Es kann von Vorteil sein, wenn bei einem Montagemodul das optische Sensorsystem ausgebildet ist, im Falle eines Erkennens des Benutzers im Detektionsbereich ein Signal für den Start einer Authentifizierungsüberprüfung zwischen dem ID-Geber und einem Zugangskontrollsystem des Kraftfahrzeugs auszulösen und die Schritte b) bis c) nur im Falle eines positiven Authentifizierungsergebnis durchzuführen. Das bedeutet, dass das Sensorsystem nun seine entscheidenden Auslösungsschritte mit Hilfe des Laserlichtblitzes nur dann durchführt, wenn auch tatsächlich der berechtigte Benutzer sich innerhalb des Detektionsbereichs befindet. Damit wird sichergestellt, dass der hohe Energiebedarf seitens des Aussendens eines Laserlichtblitzes nur dann durchgeführt wird, wenn auch tatsächlich die berechtigte Person sich an der entsprechenden Position im Detektionsbereich befindet. Bei dieser Ausführungsform ist es selbstverständlich möglich, dass der Authentifizierungsschritt nur dann durchgeführt wird, wenn das Fahrzeug verriegelt ist. In einem unverriegelten Fahrzeug ist es demnach möglich, das z. B. auch der Beifahrer oder eine Person ohne ein Funkmodul innerhalb der Hosentasche die entsprechende Aktion auslöst.

Vorteilhaft ist es darüber hinaus, wenn bei einem Montagemodul das optische Sensorsystem ausgebildet ist, die Schritte b) bis c) zu unterdrücken, wenn im Detektionsbereich kein Benutzer festgestellt worden ist. Alternativ dazu kann selbstverständlich auch aktiv ein Erlauben bzw. Durchführen der Schritte b) bis c) erfolgen, wenn im Detektionsbereich der Benutzer festgestellt worden ist. Bei diesen beiden Ausführungsvarianten wird ersichtlich, dass insbesondere der Energiebedarf deutlich reduziert werden kann. So wird die notwendige Feinbestimmung, für die Reduktion des Fehlauslösungsrisikos, nur dann durchgeführt, wenn tatsächlich auch ein Benutzer sich innerhalb des Detektionsbereichs befindet. Insbesondere in langen Parksitutationen, wenn sich ein Fahrzeug z. B. über mehrere Tage oder Wochen hinweg im Parkhaus eines Flughafens befindet, kann nun der geringe Energiebedarf für die Überwachung des Detektionsbereichs aufrechterhalten werden. Der hohe Energiebedarf, welcher z. B. für das Erzeugen der Laserlichtblitze notwendig ist, wird bei dieser kontinuierlichen Überwachung vermieden und nur dann durchgeführt, wenn tatsächlich der Benutzer innerhalb des Detektionsbereichs erkannt worden ist. Diese Ausführungsform ist insbesondere kombiniert mit der Authentifizierungsprüfung gemäß dem voranstehenden Absatz. Damit wird vermieden, dass der hohe Energiebedarf für einen Laserlichtblitz bei jeder Person durchgeführt wird, welche sich durch den Detektionsbereich bewegt. Damit wird eine noch weitere verbesserte Reduktion des notwendigen Energiebedarfs für den kontinuierlichen Betrieb des Montagemoduls erreicht.

Es ist es weiter von Vorteil, wenn bei einem Montagemodul das optische Sensorsystem eine Sendeeinheit aufweist für das Aussenden eines Laserlichtblitzes mit einer Wellenlänge im Infrarotbereich, insbesondere mit einer Wellenlänge im Bereich von 905 nm plus/minus ca. 10 nm. Laserlichtblitze mit einer Wellenlänge im infraroten Lichtbereich bringen den Vorteil mit sich, dass sie für das menschliche Auge nicht sichtbar sind. Eine Lichtbeeinflussung, z. B. in einem Parkhaus, wird auf diese Weise vermieden. Ebenfalls von Vorteil ist diese Ausführungsform, da eine optische Wahrnehmung durch den Benutzer unterbleibt und somit die Sensorik sozusagen unsichtbar ist. Nicht zuletzt kann durch die Verwendung des Laserlichtblitzes im Infrarotbereich eine Unabhängigkeit von der Umgebungsbeleuchtung erzielt werden. Ebenfalls vorteilhaft ist der Infrarotbereich in diesem Fall, da er sich deutlicher und vor allem besser von Umgebungsstreulicht bzw. Reflexionen von Sonnenlicht unterscheiden lässt. Insbesondere wird der Bereich, in welchem der Laserlichtblitz ausgesendet wird, als möglichst eng begrenzter Wellenlängenpeak durchgeführt. Damit kann auch bei einem breiten Spektrum, welches als Gesamtreflexion von der optischen Sensorvorrichtung wahrgenommen wird, ein einfaches und vor allem rechnerisches Herausfiltern des ausgesendeten und reflektierten Laserlichtblitzes erfolgen.

Ebenfalls kann durch Lichtlicht verschiedener Wellenlängen Energie gespart werden. So kann die Überwachung des Detektionsbereichs bis zum einmaligen Erkennen eines beliebigen Objekts im Detektionsbereich mit Licht einer längeren Wellenlänge erfolgen als das anschließende Überprüfen weiterer Anforderungen, die an das Erkennen eines Benutzers gestellt sind. So kann zunächst z. B. Licht einer Wellenlänge von 905 nm verwendet werden. Wird ein Objekt im Detektionsbereich festgestellt, so kann z. B. Licht einer Wellenlänge von 800 nm verwendet werden. Alternativ kann sich die Wellenlänge verkürzen, wenn das Objekt von der Fern- in die Nahzone wechselt.

Ein weiterer Vorteil ist erzielbar, wenn bei einem Montagemodul das optische Sensorsystem wenigstens einen optischen Filter, insbesondere einen Infrarotfilter aufweist für die optische Filterung eines ausgesendeten Laserlichtblitzes und/oder der Reflexion des Laserlichtblitzes.

Es ist bevorzugt, wenn dieser optische Filter ausschließlich bei der Sendeeinheit bzw. ausschließlich bei der Empfangseinheit vorgesehen ist. Damit wird es möglich die im voranstehenden Absatz bereits beschriebene Reduktion der Breite des ausgesendeten Peaks in dem Wellenlängenspektrum des Laserlichtpulses zu reduzieren. Dies führt dazu, dass in spezifischer Weise und erleichtert und insbesondere rechnerisch anschließend ein Herausfiltern des ausgesendeten Laserlichtblitzes aus einem breiten Reflexionsspektrum möglich wird. Selbstverständlich kann ein entsprechender Filter auch bei einer zugehörigen Empfangseinheit eingesetzt werden. Dadurch, dass ein solcher optischer Filter die Breite des Spektrums des ausgesendeten Laserlichtblitzes reduzieren lässt hinsichtlich seiner Wellenlänge, können einfachere und vor allem kostengünstigere Lichtquellen für den Laserlichtblitz eingesetzt werden.

Vorteilhaft ist es ebenfalls, wenn bei einem Montagemodul das optische Sensorsystem wenigstens einen Polarisator aufweist für die Polarisation eines ausgesendeten Laserlichtblitzes und/oder der Reflexion des Laserlichtblitzes. Dieser Polarisator kann eine ähnliche Funktion erfüllen, wie der entsprechende optische Filter gemäß dem voranstehenden Absatz. Auch hier wird es möglich das ausgesendete Laserlicht des Laserlichtblitzes näher zu spezifizieren, um anschließend in einem breiten empfangenen Reflexionsspektrum eine leichtere, schnellere und vor allem vorzugsweise rein rechnerische Analyse auf das reflektierte Laserlicht des Laserlichtblitzes durchzuführen. Der Polarisator kann dabei sowohl an der Sendeeinheit, als auch an der Empfangseinheit oder an diesen beiden Einheiten angeordnet sein.

Vorteilhaft ist es weiter, wenn bei einem Montagemodul das optische Sensorsystem eine Optik aufweist für eine Aufweitung der gaußschen Verteilung der Intensität eines ausgesendeten Laserlichtblitzes, um die Ränder des Detektionsbereichs mit ausreichend hoher Intensität zu versorgen. Darunter ist zu verstehen, dass eine Auffächerung des ausgesendeten Laserlichtblitzes vorzugsweise homogenisiert wird. Da es sich beim Aussenden des Laserlichtblitzes um ein Aussenden in den Detektionsbereich hin handelt, können Außengrenzen für diesen Überwachungsschritt bzw. diesen Überstimmungsschritt definiert werden. Diese Außengrenzen fallen vorzugsweise mit den Außengrenzen des vordefinierten Betätigungsbereichs zusammen, welcher bereits erläutert worden ist und kleiner als der Detektionsbereich ausgebildet ist. Diese Außengrenzen dienen nun dazu, eine Abgrenzung zwischen gewünschter Betätigung und nicht gewünschter Betätigung zu erlauben. Durch das homogenisieren der gaußschen Verteilung auf diese Ränder bzw. diese Grenzen hin wird sichergestellt, dass in der Erkennung der dreidimensionalen Information durch den Laserlichtblitz dies scharf abgegrenzt auch an den Kanten bzw. Grenzen des Betätigungsbereichs funktioniert. Dabei ist zu unterschieden, dass dieses Aufweiten des Laserlichtstrahls rein geometrischer Natur hinsichtlich der Homogenisationswirkung ist. Ein Aufweiten der Breite des Frequenzpeaks erfolgt hier explizit nicht.

Ein weiterer Vorteil ist erzielbar, wenn bei einem Montagemodul das optische Sensorsystem eine zylindrische oder im Wesentlichen zylindrische Bauform aufweist. Dies führt zu einer besonders kompakten Bauweise, die insbesondere besonders einfach und leicht im oder am Fahrzeug anordenbar ist. Bevorzugt ist die Zylinderachse dieser Bauform korreliert, z. B. entlang der Aussenderichtung des Laserlichtblitzes oder anderer Aussenderichtungen ausgerichtet. Dies führt dazu, dass bei der Montage des Montagemoduls und damit auch der optischen Sendeeinheit in leichter und eindeutiger Weise die gewünschte und für die Wirkung auch vorteilhafte Ausrichtung des Montagemoduls erfolgen kann.

Vorteilhaft ist es ebenfalls, wenn bei einem Montagemodul das optische Sensorsystem ausgebildet ist für eine Überlagerung, insbesondere eine vollständige Überlagerung, des Detektionsbereichs und/oder des Betätigungsbereichs mit einem ausgesendeten Laserlichtblitz. Darunter ist zu verstehen, dass der gesamte Detektionsbereich, bzw. bevorzugt nur der gesamte Betätigungsbereich mit dem Laserlichtblitz auch überlagert wird. Damit wird sichergestellt, dass die Qualität der zusätzlichen Abstandsinformation als 3D-Information für den gesamten Detektionsbereich bzw. den gesamten Betätigungsbereich vorliegt. Dabei ist nochmals darauf hinzuweisen, dass eine entsprechende Sendeeinheit eines Sensorsystems vorzugsweise einen Öffnungskegel für das Aussenden des Laserlichtblitzes zur Verfügung stellt. Dieser Lichtkegel als Volumenerstreckung überlagert dementsprechend auch eine zugehörige Volumenerstreckung eines Betätigungsvolumens bzw. des Betätigungsbereichs und eines Detektionsvolumens bzw. des Detektionsbereichs.

Vorteilhaft ist es darüber hinaus, wenn bei einem Montagemodul das optische Sensorsystem eine Kontrollvorrichtung mit einer Sendeeinheit für das Aussenden eines Laserlichtblitzes aufweist, wobei die Sendeeinheit eine Ausrichtung mit einer Aussenderichtung spitzwinklig zur Horizontalen, insbesondere mit einem Winkel größer als ca. 30° aufweist. Insbesondere ist dieser Winkel nach unten gerichtet. Da üblicherweise Laserlichtblitze für solche Ausführungsformen mit höherer Intensität Verwendung finden, bringt die Ausrichtung nach unten einen Sicherheitsgewinn mit sich. Insbesondere wird es auf diese Weise auch möglich Energien zu verwenden, welche in der Höhe eine Laserklasse definieren, die schädigend beim Auftreffen im Auge des Benutzers wirken würde. Durch das Ausrichten der Aussenderichtung nach unten, kann die Gefahr des Eintritts in das menschliche Auge beim Verwenden eines solchen optischen Systems deutlich reduziert werden. Gleichzeitig erfolgt ein Ausrichten auf einen Betätigungsbereich, welcher vorzugsweise am Boden oder im Bereich des Bodens, bzw. knapp oberhalb des Bodens angeordnet ist. Wird eine Seitentür überwacht, kann entsprechend eine optische Überwachung im Bereich des Türgriffs erfolgen.

Vorteilhaft ist es darüber hinaus, wenn bei einem Montagemodul das optische Sensorsystem eine Kontrollvorrichtung aufweist für eine Auswertung der Zeitdifferenz zwischen dem Aussenden eines Laserlichtblitzes und dem Erkennen der Reflexion des Laserlichtblitzes von dem Benutzer auf den Abstand des Benutzers zum optischen Sensorsystem. Hierbei kommt insbesondere die bereits angedeutete TOF-Bestimmung zum Einsatz. Dabei wird der Zeitpunkt bestimmt, zu welchem der Laserlichtblitz ausgesendet wird. Danach wird der Zeitpunkt bestimmt, zu welchem die Reflexion des Laserlichtblitzes vom Benutzer von einer entsprechenden Empfangseinheit des optischen Sensorsystems wahrgenommen wird. Zuletzt kann die Zeitdifferenz zwischen diesen beiden Zeitpunkten bestimmt werden. Die Zeitdifferenz wird durch Korrelation mit der Lichtgeschwindigkeit zur Bestimmung des tatsächlichen Abstandes zum Benutzer verwendet. Damit kann eine dreidimensionale Information hinsichtlich der geometrischen Positionierung des Benutzers innerhalb des Detektionsbereichs bzw. innerhalb des Betätigungsbereichs erfolgen. Es lassen sich somit insbesondere sogar genaue Koordinaten hinsichtlich dieser drei Dimensionen für den Benutzer bzw. des Körperteils des Benutzers erfassen.

Vorteilhaft ist es darüber hinaus, wenn bei einem Montagemodul das Signal für die Durchführung wenigstens einer der folgenden Aktionen am Kraftfahrzeug ausgelöst wird:
- Öffnen und/oder Schließen der Heckklappe des Fahrzeugs
- Öffnen und/oder Schließen einer Schiebetür des Kraftfahrzeugs
- Öffnen und/oder Schließen einer Seitentür des Kraftfahrzeugs

Bei der voranstehenden Aufzählung handelt es sich um eine nicht-abschließende Liste. Das Öffnen und/oder Schließen des jeweiligen Objekts, also der Heckklappe, der Schiebetür, der Seitentür, des Fensters, der Motorhaube oder eines entsprechenden Schiebedachs kann vorzugsweise automatisch erfolgen. So kann beispielsweise der Benutzer des Fahrzeugs durch eine entsprechende Geste nun aktiv die Heckklappe des Fahrzeugs öffnen oder schließen. Auch das automatisch und damit motorisch angetriebene Öffnen und Schließen einer Schiebetür oder Seitentür des Fahrzeugs ist mit dem derartig ausgestatteten Montagemodul möglich. Gleiches gilt für eine motorische Bewegung des Fensters, des Schiebedachs, der Motorhaube oder des Tankdeckels. Selbstverständlich können auch weitergehende Funktionen des Fahrzeugs mit einer Aktion bedacht werden. Dabei kann es z. B. eine Steuerung oder Regelung hinsichtlich Einschalten und Ausschalten einer Standheizung sein. Auch eine entsprechende Scheibenheizung kann im Winter bereits von außerhalb des Fahrzeugs eingeschaltet werden. Auch eine Lichtfunktion, welche eine verbesserte Ausleuchtung in dem Bereich, in welchem sich der Benutzer momentan befindet, mit sich bringt, lässt sich mit einem Montagemodul ein- oder ausschalten. Vor oder nach einem Parkvorgang lassen sich die Seitenspiegel des Fahrzeugs durch ein Montagemodul automatisch ein- und ausklappen. Auch die Alarmanlage eines Kraftfahrzeugs kann mit Hilfe eines Montagemoduls bedienbar sein. Nicht zuletzt können benutzerspezifische Einstellungen, wie z. B. die Sitzeinstellung auf dem Fahrersitz durch ein Montagemodul vorab eingestellt werden.

Ein weiterer Vorteil kann es sein, wenn bei einem Montagemodul das optische Sensorsystem eine Kontrollvorrichtung mit einer Detektionseinheit für die Durchführung des Schrittes a), eine Sendeeinheit für die Durchführung des Schrittes b) und eine Auswerteeinheit für die Durchführung des Schrittes c) aufweist. Damit sind sämtliche Verfahrensschritte, welche von einem optischen Sensorsystem durchgeführt werden, durch entsprechende Einheiten der Kontrollvorrichtung durchführbar. Selbstverständlich können einzelne Einheiten auch gemeinsam ausgebildet sein. So können z. B. die Empfangseinheit und die Detektionseinheit gemeinsam als einzige und gemeinsame Sensoreinheit ausgebildet sein. Auch kann eine Sendeeinheit doppelt für unterschiedliche verschieden Lichtarten ausgebildet sein.

Ein Montagemodul gemäß dem voranstehenden Absatz lässt sich dahingehend weiterbilden, dass die Sendeeinheit zumindest eine Laserlichtquelle aufweist für das Aussenden eines Laserlichtblitzes, insbesondere für das gepulste Aussenden für eine Vielzahl, von Laserlichtblitzen hintereinander und die Kontrollvorrichtung weiter eine Empfangseinheit aufweist für das Erkennen einer Reflexion des Laserlichtblitzes. Damit wird eine weitere Verbesserung des Montagemoduls erzielt, da nun nicht mehr nur eine einzige Positionierung, sondern auch eine Detailinformation hinsichtlich der dreidimensionalen Bewegung des Benutzers relativ zum Betätigungsbereich erfassbar wird. Die Laserlichtblitze können dabei z. B. von Laserlichtdioden ausgesendet werden. Dabei kann jede entsprechende Laserlichtquelle eine oder mehrere Laserlichtdioden aufweisen. Das gepulste Aussenden erfolgt vorzugsweise mit einer Frequenz von 20 oder mehr Laserlichtblitzen pro Sekunde.

Ein weiterer Vorteil kann es sein, wenn die zumindest eine Laserlichquelle neben der Empfangseinheit angeordnet ist. Insbesondere sind bei mehreren Laserlichtquellen diese alle gleichmäßig bzw. um die Empfangseinheit herum verteilt. Damit wird eine vergleichmäßigte Ausleuchtung erzielbar. Bevorzugt wird eine große Nähe zwischen der Sendeeinheit und der Empfangseinheit ausgebildet, sodass bei der bereits beschriebenen TOF-Messung der Winkel zwischen der Aussenderichtung und der Empfangsrichtung der Sendeeinheit und der Empfangseinheit vernachlässigbar wird.

Weiter kann es von Vorteil sein, wenn bei einem Montagemodul die Sendeeinheit ausgebildet ist einen Laserlichtblitz entlang von wenigstens zwei Aussenderichtungen auszusenden, welche sich in einem Brennpunkt treffen, der innerhalb des Detektionsbereichs, insbesondere innerhalb des Betätigungsbereichs angeordnet ist. Diese Laserlichtblitze können dementsprechend jeweils einzeln mit verringerter Energie ausgesendet werden, sodass die notwendige Energie für die gewünschte Reflexionsarbeit erst im Brennpunkt innerhalb des Detektionsbereichs erreicht wird. Dieser Brennpunkt kann punktförmig oder auch als Volumenelement vorgesehen sein, welcher innerhalb des Detektionsbereichs ausgebildet ist. Bevorzugt wird ein solches Volumenelement des Brennpunkts kleiner oder gleich dem Betätigungsbereich in Form eines Betätigungsvolumens.

Vorteilhaft ist es ebenfalls, wenn bei einem Montagemodul die Aussendung eines Laserlichtblitzes in den Betätigungsbereich erfolgt, welcher kleiner als der Detektionsbereich innerhalb des Detektionsbereichs ausgebildet ist. Damit wird der Betätigungsbereich mit dem Laserlichtblitz korreliert, sodass in unnötigen Bereichen des Detektionsbereichs überhaupt keine dreidimensionale Feinüberwachung mit dem Laserlichtblitz mehr erfolgen muss. Dies reduziert insbesondere den notwendigen Energiebedarf, dass der Laserlichtblitz nun für den ausschließlichen notwendigen Betätigungsbereich eingeschränkt verwendet wird.

Ebenfalls Gegenstand der vorliegenden Erfindung ist ein Verfahren für das Auslösen eines Signals für die Durchführung einer Aktion an einem Kraftfahrzeug, aufweisend die folgenden Schritte:
a) Überwachen eines außerhalb des Kraftfahrzeugs liegenden Detektionsbereichs, um die Nähe eines Benutzers festzustellen, wobei das Überwachen kontinuierlich erfolgt, um zu erkennen, wenn ein Benutzer in den Detektionsbereich eintritt,
b) Im Falle eines Erkennens des Benutzers in dem Detektionsbereich, Überwachen eines innerhalb des Detektionsbereichs angeordneten Betätigungsbereichs, um festzustellen, ob der Benutzer sich innerhalb des Betätigungsbereichs befindet und
c) im Falle eines Erkennens des Benutzers in dem Betätigungsbereich Auslösen eines Signals für die Durchführung einer Aktion am Kraftfahrzeug.

Ein erfindungsgemäßes Verfahren ist insbesondere für den Betrieb in einem erfindungsgemäßen Montagemodul ausgebildet. Dementsprechend bringt ein erfindungsgemäßes Verfahren die gleichen Vorteile mit sich, wie sie ausführlich mit Bezug auf ein erfindungsgemäßes Montagemodul erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Draufsicht auf einen Heckbereich eines Kraftfahrzeuges mit einem erfindungsgemäßen Montagemodul und einem Authentifizierungssystem,
- Fig. 2: der Heckbereich aus Figur 1 in einer Seitenansicht,
- Fig. 3: ein Seitenbereich eines Kraftfahrzeuges mit einem nicht-erfindungsgemäßen Montagemodul und einem Authentifizierungssystem in einer Seitenansicht,
- Fig. 4: das nicht-erfindungsgemäße Montagemodul aus Figur 3 in einer anderen Seitenansicht,
- Fig. 5: eine Ausführungsform eines erfindungsgemäßen Montagemoduls,
- Fig. 6: die Ausführungsform der Figur 5 mit einem Benutzer innerhalb des Betätigungsbereichs,
- Fig. 7: eine weitere Ausführungsform eines erfindungsgemäßen Montagemoduls,
- Fig. 8: eine weitere Ausführungsform eines erfindungsgemäßen Montagemoduls und
- Fig. 9: eine weitere Ausführungsform eines erfindungsgemäßen Montagemoduls.

Elemente mit gleicher Funktion und Wirkungsweise sind in den Figuren mit denselben Bezugszeichen bezeichnet.

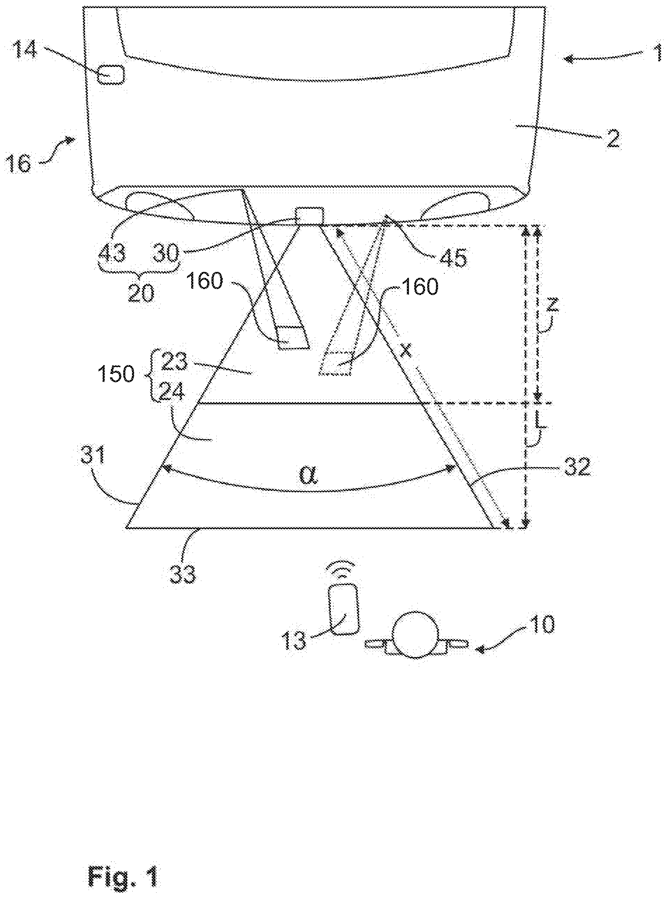

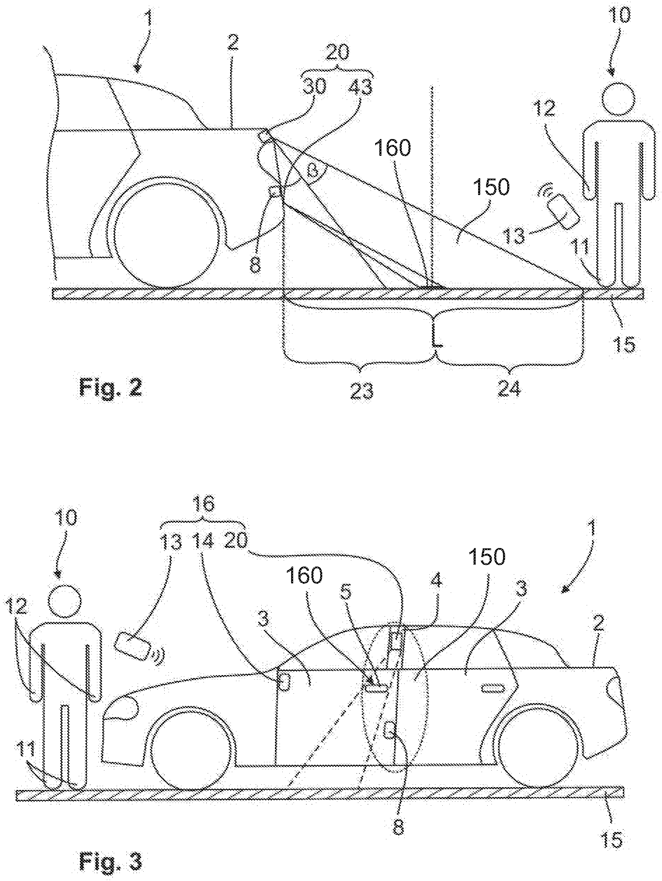

In den Figuren 1 und 2 ist jeweils dargestellt, wie ein erfindungsgemäßes Montagemodul 20 und ein Authentifizierungssystem 16 bei einem Kraftfahrzeug 1 eingesetzt werden. In den Figuren 1 und 2 ist hierbei der Einsatz in einem Heckbereich eines Kraftfahrzeuges 1 mit einer Heckklappe 2 dargestellt. Das optische Sensorsystem 30 des Montagemoduls 20 ist im Bereich der Heckklappe 2, z. B. in einer Griffleiste der Heckklappe 2, angeordnet. Durch das optische Sensorsystem 30 wird ein außerhalb des Kraftfahrzeuges 1 liegender Detektionsbereich 150 erzeugt. Das optische Sensorsystem 30 überwacht bei einem abgestellten Kraftfahrzeug 1 den Detektionsbereich 150 dauerhaft. Nähert sich ein Benutzer 10, der in den Figuren 1 und 2 noch außerhalb des Detektionsbereiches 150 dargestellt ist, mit einem ID-Geber 13 dem Kraftfahrzeug 1 und dem optischen Sensorsystem 30, so gelangt der Benutzer 10 in den Detektionsbereich 150. Wird der Benutzer 10 in dem Detektionsbereich 150 erkannt, so wird vorzugsweise ein Signal zum Starten einer Authentifizierungsüberprüfung ausgelöst.

Dadurch, dass das optische Sensorsystem 30 erkennt, dass sich ein Benutzer 10 dem Kraftfahrzeug 1 nähert, und im Falle eines Erkennens des Benutzers 10 im Detektionsbereich 150 ein Signal für den Start einer Authentifizierungsüberprüfung ausgelöst wird, muss der Benutzer nicht aktiv werden, um die Authentifizierungsüberprüfung einzuleiten. Somit muss der Benutzer 10 den ID-Geber 13 nicht in einer Hand halten, sondern es genügt, den ID-Geber 13 beispielsweise in einer Tasche bei sich zu führen. Somit handelt es sich um eine Passive-Keyless-Entry-Überprüfung.

Dadurch, dass ein optisches Sensorsystem 30 den Detektionsbereich 150 überwacht, kann zum einen gewährleistet werden, dass das Signal für den Start der Authentifizierungsüberprüfung ausgelöst wird, bevor der Benutzer 10 das Kraftfahrzeug 1 erreicht. Hierbei wird üblicherweise die Authentifizierungsüberprüfung abgeschlossen sein, bevor der Benutzer 10 näher als ein Betätigungsbereich 160 an das Kraftfahrzeug 1 herangekommen ist. Andererseits ist der Detektionsbereich 150 auf einen vorgegebenen Raumabschnitt beschränkt, der beispielsweise in einer Draufsicht nur wenige m² umfasst, sodass nur selten das Signal für den Start der Authentifizierungsüberprüfung ausgelöst wird. Hierdurch kann rechtzeitig und gezielt das Signal für den Start der Authentifizierungsüberprüfung ausgelöst werden.

In einer Draufsicht weist der Detektionsbereich 150 zwei Schenkel 31, 32 auf, die sich zum optischen Sensorsystem 30 hin annähern. Ebenfalls weist der Detektionsbereich 150 eine Basis 33 auf, die an der dem optischen Sensorsystem 30 abgewandten Seite des Detektionsbereiches 21 den Detektionsbereich 21 begrenzt. Der Detektionsbereich 21 endet an der Basis 33. Die Basis 33 ist gerade ausgebildet. Die beiden Schenkel 31, 32 bilden einen Winkel a. Durch den sich verjüngenden Detektionsbereich 150 in Richtung des Kraftfahrzeuges 1 kann die rechtzeitige und dennoch seltene Auslösung des Signals zum Start einer Authentifizierung besonders gut erreicht werden.

Der Winkel α beträgt in Figur 1 zwischen 30° und 60°. Hierdurch wird verhindert, dass ein Benutzer 10, der seitlich an dem Kraftfahrzeug 1 vorbeiläuft, in den Detektionsbereich 150 gelangt. Eine Länge L, die sich aus dem Abstand der Basis 33 zu dem optischen Sensorsystem 30 ergibt, beträgt 1,5 m. Durch die Länge L und den Winkel α ergibt sich auch x als maximale Entfernung eines Punktes des Detektionsbereichs 150 zum optischen Sensorsystem 30. Durch die gewählten Parameter ist der Detektionsbereich 150 begrenzt, so dass nur wenig elektrische Leistung zum Überwachen des Detektionsbereichs 150 benötigt wird. Wie in Figur 2 dargestellt endet der Detektionsbereich 150 auf einer Bodenfläche 15, auf der das Kraftfahrzeug 1 abgestellt ist. Hierdurch weist der Detektionsbereich 150 einen schrägen Kegelstumpf auf. Ein in Figur 2 abgebildeter Winkel β entspricht einem Winkel des Detektionsbereichs 21 in einer Seitenansicht. Vorliegend ist der Winkel α ungleich dem Winkel β gewählt, so dass der Detektionsbereich 150 elliptisch ausgebildet ist.

Eine weitere Möglichkeit, nur wenig elektrische Leistung zu benötigen, wird durch die Aufteilung des Detektionsbereichs 150 in eine Fernzone 24 und eine Nahzone 23 erreicht, wobei die Nahzone 23 einen geringeren Abstand zum Sensorsystem 30 als die Fernzone 24 aufweist. Gelangt der Benutzer 10 zunächst in die Fernzone 24, so stellt das optische Sensorsystem 30 fest, dass sich ein Objekt in der Fernzone 24 befindet. Ferner überprüft das optische Sensorsystem 30, ob das Objekt eine vorgegebene Größe aufweist. Weist das Objekt die vorgegebene Größe auf und begibt sich das Objekt in die Nahzone 23 des Detektionsbereichs 150, so wird in der Nahzone 23 zusätzlich aus einer Messung des Abstands des Objektes zu einem optischen Sensor 50 geschlossen, ob sich das Objekt dem optischen Sensor annähert. Wird dieses bejaht, so wird der Benutzer 10 erkannt und ein Signal für den Start einer Authentifizierungsüberprüfung zwischen dem ID-Geber 13 und einem Zugangskontrollsystem 14 des Kraftfahrzeuges 1 ausgelöst.

Durch das Signal wird das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2.

In den Figuren 1 und 2 ist des Weiteren der erste Betätigungsbereich 160 dargestellt. Nach einer erfolgreichen Authentifizierung überwacht das optische Sensorsystem 30 den ersten Betätigungsbereich 160. Führt nun der Benutzer 10 eine vordefinierte Bewegung in dem ersten Betätigungsbereich 160 aus und tritt beispielsweise mit einem Fuß 11 für eine gewisse Zeitdauer und innerhalb einer vordefinierten Betätigungsdauer in den ersten Betätigungsbereich 160, so wird ein Arbeitssignal ausgelöst. Bei dem Arbeitssignal handelt es sich zum Signal der Öffnung der Heckklappe 2. Hierbei kann es nur sein, dass ein Türschloss 8 der Heckklappe 2 entriegelt wird und durch den Druck einer Dichtung leicht aufspringt. Andererseits ist es denkbar, dass zugleich eine motorische Öffnungshilfe durch das Arbeitssignal aktiviert wird, so dass die Heckklappe 2 sich vollständig öffnet.

Der Betätigungsbereich 160 ist vorzugsweise sichtbar auf der Bodenfläche 15 ausgebildet. Hierzu ist bei dieser Ausführungsform ein erstes Anzeigeelement 43 vorgesehen, dass den Betätigungsbereich 160 für den Benutzer 10 sichtbar macht. Hierzu kann das erste Anzeigeelement 43 sichtbares Licht emittieren. Das erste Anzeigeelement 43 wird nach der erfolgreichen Authentifizierung angesteuert. Der erste Betätigungsbereich 160 liegt in den Figuren 1 und 2 innerhalb der Nahzone 23 des Detektionsbereiches 150. Der Betätigungsbereich 160 ist von geringeren räumlichen Ausmaßen als der Detektionsbereich 150.

Es kann sein, dass der erste Betätigungsbereich 160 der einzige Betätigungsbereich ist. Optional und daher in Figur 1 gestrichelt dargestellt, ist zusätzlich ein zweiter Betätigungsbereich 160 dargestellt. In diesem Fall muss ein Benutzer 10 innerhalb einer vordefinierten Betätigungsdauer eine vordefinierte Bewegung in beiden Betätigungsbereichen 160 ausführen, um das Arbeitssignal bereitzustellen. Zum Sichtbarmachen des zweiten Betätigungsbereichs 160 dient ein zweites Anzeigeelement 45 des Montagemoduls 20.

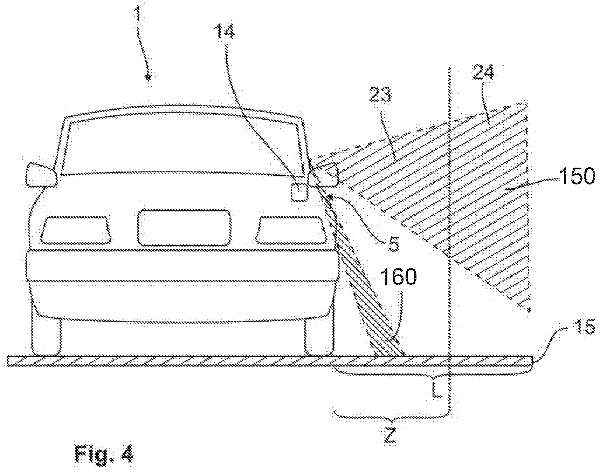

In den Figuren 3 und 4 ist ein weiteres Ausführungsbeispiel dargestellt, wie ein nichterfindungsgemäßes Montagemodul 20 eingesetzt wird. Das Montagemodul 20 ist in den Figuren 3 und 4 in einer B-Säule 4 einer Fahrzeugseite angeordnet. Durch den Detektionsbereich 150 wird eine Annäherung an eine Seitentür 3 des Kraftfahrzeuges 1 überwacht. Das Arbeitssignal kann zum Öffnen der Seitentür 3 dienen. Die vordefinierte Bewegung zum Bereitstellen des Arbeitssignals kann eine vordefinierte Bewegung mit einer Hand 12 des Benutzers 10 im Bereich eines Türgriffs 5 sein.

Im Gegensatz zu dem Ausführungsbeispiel der Figuren 1 und 2, befindet sich in dem in den Figuren 3 und 4 dargestellten Ausführungsbeispiel der außerhalb des Kraftfahrzeuges 1 liegende Detektionsbereich 150 vollständig über der Bodenfläche 15. Der Detektionsbereich 150 weist eine ebene Grundfläche auf. Der Betätigungsbereich 160 des Ausführungsbeispiels der Figuren 3 und 4 umfasst den Bereich des Türgriffes 5. Der einzige Betätigungsbereich 160 liegt außerhalb des Detektionsbereiches 150.

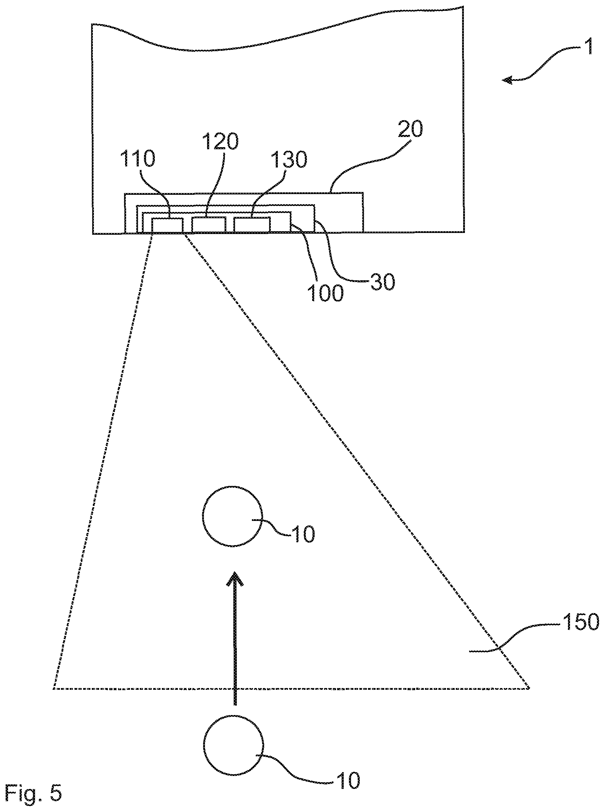

Figur 5 zeigt eine Ausführungsform eines erfindungsgemäßen Montagemoduls 20, welches in einem Kraftfahrzeug 1 auf der Rückseite angeordnet ist. Dieses Montagemodul 20 ist mit einer Kontrollvorrichtung 100 ausgestattet, welche Teil eines optischen Sensorsystems 30 ist. Die Kontrollvorrichtung 100 dieser Ausführungsform weist eine Detektionseinheit 110, eine Sendeeinheit 120 und eine Empfangseinheit 130 auf.

Die Detektionseinheit 110 ist in der Lage den rückwärtig hinter dem Kraftfahrzeug 1 angeordneten Detektionsbereich 150 zu überwachen. Dafür kann die Detektionseinheit 110 z. B. einen Fotosensor aufweisen. Auch zusätzliche Sendeeinheiten 120 für die Überwachung des Detektionsbereichs durch künstliches Licht sind möglich, um eine entsprechende Unabhängigkeit von der Umgebungsbeleuchtung zu erzielen. Bereits hier können auch gepulste Lichtblitze eingesetzt werden.

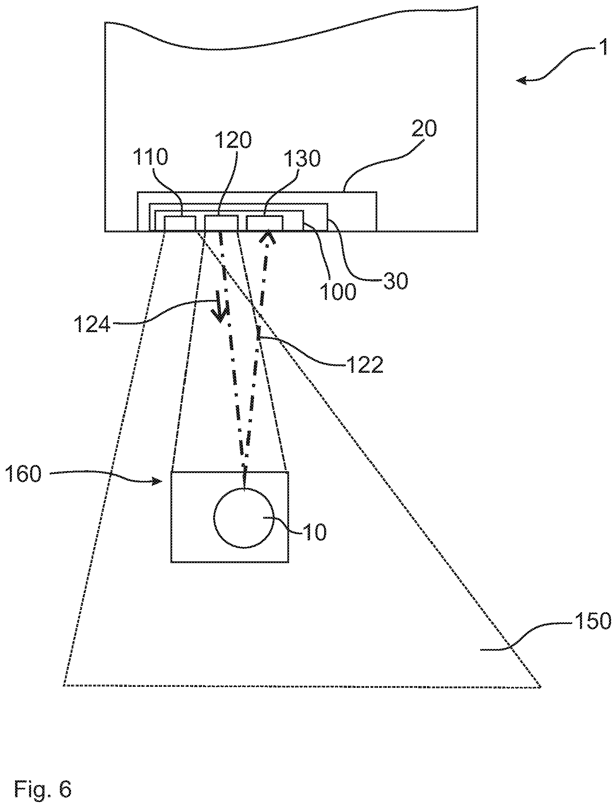

Es ist nun zusätzlich eine Sendeeinheit 120 für das Aussenden eines Laserlichtblitzes 122 vorgesehen. Die durchzuführenden Verfahrensschritte, welche durch ein erfindungsgemäßes Montagemodul 20 möglich werden, werden nun anhand der Figuren 5 und 6 näher erläutert.

In Figur 5 ist zu erkennen, wie ein Benutzer 10 z. B. mit einem Körperteil oder komplett in den Detektionsbereich 150 eintritt. Da der Detektionsbereich 150 durch die Detektionseinheit 110 im Wesentlichen kontinuierlich überwacht wird, erkennt das optische Sensorsystem 30 mit Hilfe der Kontrollvorrichtung 100 diese Bewegung des Benutzers 10. Nun kann, vorzugsweise in einem zweistufigen Verfahren, ein Aussenden des Laserlichtblitzes 122 erfolgen, um eine zusätzliche Positionsinformation für den Benutzer 10 zu erzielen. Hier wird nun eine Korrelation der Position des Benutzers 10 mit einem Betätigungsbereich 160 möglich. Dabei wird der Laserlichtblitz 120 vorzugsweise mit einer Aussenderichtung 124 ausgesendet, welcher mit dem Betätigungsbereich 160 überlappt bzw. diesen exakt mit homogener Intensitätsverteilung ausleuchtet.

Wie der Figur 6 zu entnehmen ist, wird der Laserlichtblitz 122 zumindest teilweise vom Benutzer 10 reflektiert. Dieses reflektierte Licht des Laserlichtblitzes 122 kann von einer Empfangseinheit 130 nun empfangen und ausgewertet werden. Eine Auswertung erfolgt insbesondere auf Basis der sog. TOF-Messung, sodass nun eine zusätzliche Abstandsinformation für die genauere Positionierung des Benutzers 10 mit Korrelation zum Betätigungsbereich 160 vorliegt.

Dadurch, dass gemäß Figur 6 der Benutzer 10 nun innerhalb des Betätigungsbereichs 160 erkannt worden ist, kann ein Signal ausgelöst werden für die Durchführung einer Aktion am Kraftfahrzeug 1. Dabei kann es sich z. B. um das Öffnen der Heckklappe oder einer seitlichen Schiebetür des Kraftfahrzeugs 1 handeln.

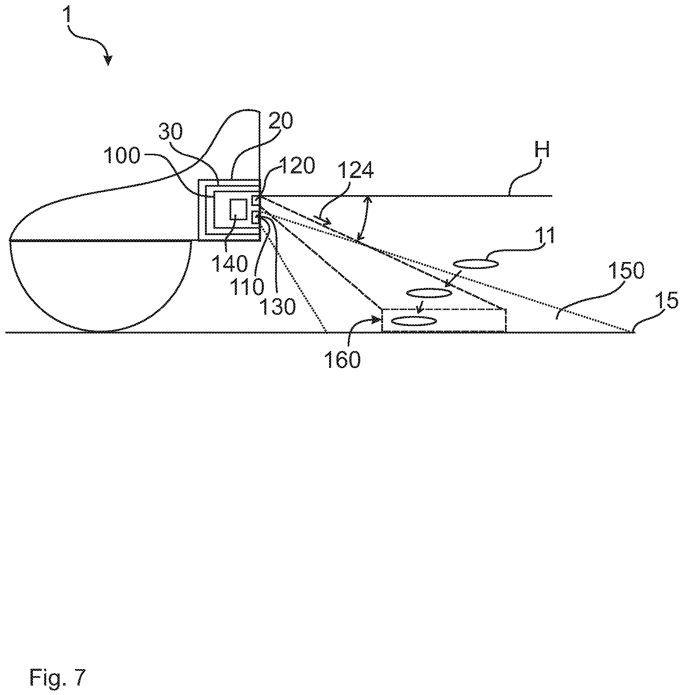

Figur 7 zeigt schematisch in der seitlichen Darstellung eine weitere Ausführung eines erfindungsgemäßen Montagemoduls 20. Dieses ist mit einem optischen System 30 ausgestattet, welches wieder eine Kontrollvorrichtung 100 aufweist. Hier ist gut zu erkennen, dass die Sendeeinheit 120 oberhalb der Detektionseinheit 110 angeordnet ist, wobei die Detektionseinheit 110 hier in Funktionsunion auch die Empfangseinheit 130 ausbildet. Für die Durchführung der einzelnen Verfahrensschritte, insbesondere der Auswertung weist die Kontrollvorrichtung 100 dieser Ausführungsform noch eine Auswerteinheit 140 auf.

Wie in Figur 7 gut zu erkennen ist, wird durch die Feinpositionsbestimmung mit Hilfe des Laserlichtblitzes 122 nun eine Volumeninformation hinsichtlich des Detektionsbereichs 150 bzw. des Betätigungsbereichs 160 überwachbar. Hier ist die Bewegung eines Fußes 11 eines Benutzers 10 dargestellt. Bewegt sich der Fuß 11 des Benutzers 10 entlang der drei dargestellten Positionen, so dringt er zuerst in das Volumen des Detektionsbereichs 150 ein. Erst zu diesem Zeitpunkt erfolgt vorzugsweise in dem zweistufigen Verfahren nun das Aussenden der gepulsten Laserlichtblitze 122 entlang der Aussenderichtung 124, solange bis erkannt wird, dass sich der Fuß 11 des Benutzers 10 nun im Volumen des Betätigungsbereichs 160 befindet. Nun kann das Signal für die Durchführung einer Aktion am Kraftfahrzeug ausgelöst werden.

Weiter ist zu erkennen, dass gemäß Figur 7 ein Winkel zwischen der Horizontalen H und der Aussenderichtung 124 des Laserlichtblitzes 122 ausgebildet ist, welcher spitzwinklig nach unten zeigt. Damit ist eine Überwachung von oben nach unten möglich, sodass ein Risiko einer Verletzung des menschlichen Auges vorzugsweise sogar vollständig ausgeschlossen werden kann.

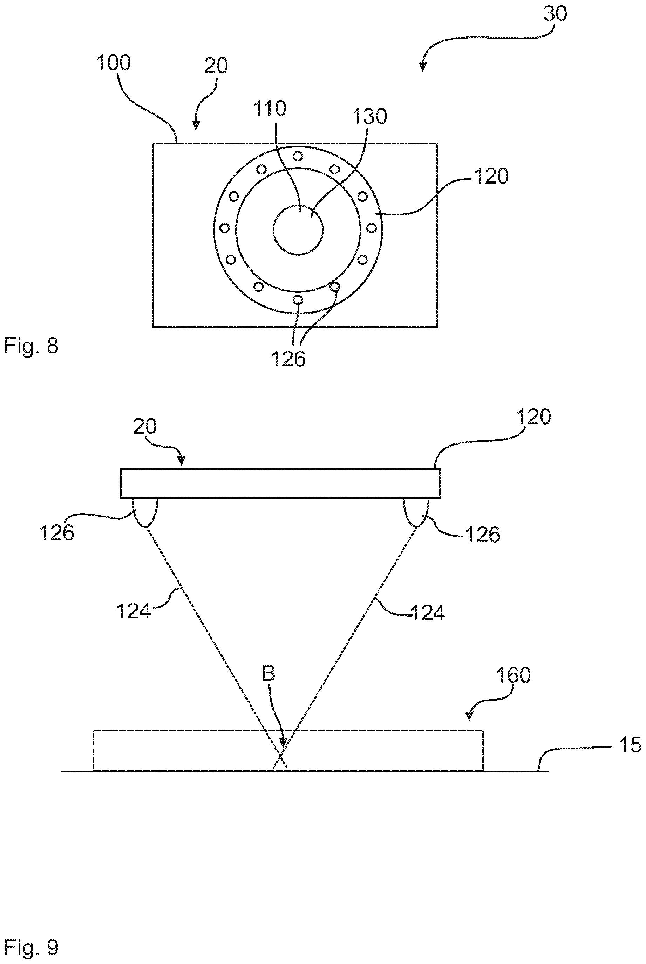

In Figur 8 ist eine Ausführungsform eines erfindungsgemäßen Montagemoduls 20 dargestellt, bei welchem die Sendeeinheit 120 eine Mehrzahl von Laserlichtquellen 126 aufweist. Diese einzelnen Laserlichtquellen 126 sind hier ringförmig und gleichmäßig verteilt um die Empfangseinheit 130, welche hier auch die Detektionseinheit 110 ausbildet, angeordnet. Dies führt zu einer besonders gleichmäßigen Lichtverteilung bezogen auf das Aussenden des Laserlichtblitzes 122. Gleichzeitig wird durch die Reduktion des Abstandes zwischen der Sendeeinheit 120 und der Empfangseinheit 130 eine Vernachlässigbarkeit des Winkels für die anschließende Auswertung mit der TOF-Methode möglich.

Figur 9 zeigt eine weitere Ausführungsform eines erfindungsgemäßen Montagemoduls 20. Hier sind mehrere Laserlichtquellen 126 mit Abstand zueinander für die Sendeeinheit 120 ausgebildet. Daraus ergeben sich mehrere, hier schematisch dargestellt zwei, Aussenderichtungen 124, welche einen Brennpunkt B innerhalb des Betätigungsbereichs 160 aufweisen. Dies führt dazu, dass die einzelnen Laserlichtquellen 126 mit reduzierter Energie betrieben werden können, da erst im Brennpunkt B die entsprechende Energiedichte für die gewünschte Reflexion an einem Benutzer 10 zur Verfügung gestellt wird. Dies reduziert neben dem Energiebedarf auch die Gefahr der Schädigung, z. B. des menschlichen Auges, da die hohe Energiedichte nur im Brennpunkt B erreicht wird. Dabei ist darauf hinzuweisen, dass der Brennpunkt B auch als Volumenelement innerhalb des Betätigungsbereichs 160 ausgebildet sein kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Kraftfahrzeug
- 2: Heckklappe
- 3: Seitentür
- 4: B-Säule
- 5: Türgriff
- 8: Türschloss

- 10: Benutzer
- 11: Fuß
- 12: Hand
- 13: ID-Geber
- 14: Zugangskontrollsystem
- 15: Bodenfläche
- 16: Authentifizierungssystem

- 20: Montagemodul
- 23: Nahzone
- 24: Fernzone

- 30: optisches Sensorsystem
- 31: Schenkel des Detektionsbereichs
- 32: Schenkel des Detektionsbereichs
- 33: Basis

- 43: erstes Anzeigeelement
- 45: zweites Anzeigeelement

- 100: Kontrollvorrichtung
- 110: Detektionseinheit
- 120: Sendeeinheit
- 122: Laserlichtblitz
- 124: Aussenderichtung
- 126: Laserlichtquelle
- 130: Empfangseinheit
- 140: Auswerteinheit
- 150: Detektionsbereich
- 160: Betätigungsbereich

- α: Winkel zwischen den beiden Schenkeln des Detektionsbereichs
- β: Winkel

- H: Horizontale
- B: Brennpunkt
- L: Länge
- x: maximale Entfernung eines Punktes des Detektionsbereichs

## Patentansprüche

1. Montagemodul (20) für ein Kraftfahrzeug (1), mit einem optischen Sensorsystem (30), welches geeignet ist,
a) einen außerhalb des Kraftfahrzeugs (1) liegenden Detektionsbereich (150) zu überwachen, um die Nähe eines Benutzers (10) festzustellen,
wobei das Überwachen kontinuierlich erfolgt, um zu erkennen, wenn ein Benutzer (10) in den Detektionsbereich (150) eintritt,
b) im Falle eines Erkennens des Benutzers (10) in dem Detektionsbereich (150), einen innerhalb des Detektionsbereichs (150) angeordneten Betätigungsbereich (160) zu überwachen, um festzustellen, ob der Benutzer (10) sich innerhalb des Betätigungsbereichs (160) befindet und
c) im Falle eines Erkennens des Benutzers (10) in dem Betätigungsbereich (160) ein Signal für die Durchführung einer Aktion am Kraftfahrzeug (1) auszulösen,
wobei das optische Sensorsystem (30) ausgebildet ist für die Überwachung des Detektionsbereichs (150) weniger Energie aufzuwenden, als für die Überwachung des Betätigungsbereichs (160), wobei für die Ausführung des Schrittes a) energiearme und für den Dauerbetrieb einsetzbare Sende- bzw. Überwachungseinheiten vorgesehen sind, und eine Einheit innerhalb des optischen Sensorsystems (30) für den Schritt b) mit höherem Energiebedarf ausgebildet ist.

2. Montagemodul (20) nach Anspruch 1,
**dadurch gekennzeichnet,**
**dass**
das optische Sensorsystem (30) eine Kontrollvorrichtung (100) aufweist, welche mit einer Detektionseinheit (150) für die Überwachung des Detektionsbereichs (150) ausgebildet ist, und vorzugsweise eine Sendeeinheit (120) und eine Empfangseinheit (130) für die Überwachung des Betätigungsbereichs (160) vorgesehen ist, und wobei ein Unterschied im Energiebedarf bei der Durchführung des jeweiligen Verfahrensschrittes vorgesehen ist, wobei für die permanente Überwachung bei der Überwachung des Detektionsbereichs (150) ein reduzierter Energiebedarf zur Schonung der Batterie des Fahrzeugs (1) bereitgestellt ist, und für die notwendige Detailbestimmung bzw. Feinpositionierung des Benutzers (10) relativ zum Betätigungsbereich (160) ein erhöhter Energiebedarf einsetzbar ist, wobei dieser nur in Einzelsituationen in Abhängigkeit von der tatsächlichen Positionierung des Benutzers (10) relativ zum Detektionsbereich (150) vorgenommen wird, wobei das optische Sensorsystem (30) die Kontrollvorrichtung (100) mit der Detektionseinheit (110) für die Durchführung des Schrittes a) aufweist, wobei die Detektionseinheit (110) hierfür einen Fotosensor aufweist.

3. Montagemodul (20) nach einem der vorangegangenen Ansprüche,
**dadurch gekennzeichnet,**
**dass** das optische Sensorsystem (30) ausgebildet ist für die Überwachung des Betätigungsbereichs (160) innerhalb des Detektionsbereichs (150) einen Laserlichtblitz (122) auszusenden und eine Reflexion des Laserlichtblitzes (122) von dem Benutzer (10) zu erkennen.

4. Montagemodul (20) nach einem der vorangegangenen Ansprüche,
**dadurch gekennzeichnet,**
**dass** das optische Sensorsystem (30) ausgebildet ist, im Falle eines Erkennens des Benutzers (10) im Detektionsbereich (150) ein Signal für den Start einer Authentifizierungsüberprüfung zwischen einem ID-Geber (13) und einem Zugangskontrollsystem (14) des Kraftfahrzeugs (1) auszulösen und die Schritte b) bis c) nur im Falle eines positiven Authentifizierungsergebnisses durchgeführt werden.

5. Montagemodul (20) nach einem der vorangegangenen Ansprüche,
**dadurch gekennzeichnet,**
**dass** das optische Sensorsystem (30) ausgebildet ist, die Schritte b) bis c) zu Unterdrücken, wenn im Detektionsbereich (150) kein Benutzer (10) festgestellt worden ist.

6. Montagemodul (20) nach einem der vorangegangenen Ansprüche,
**dadurch gekennzeichnet,**
**dass** das optische Sensorsystem (30) eine Sendeeinheit (120) aufweist für das Aussenden eines Laserlichtblitzes (122) mit einer Wellenlänge im infraroten Bereich, insbesondere mit einer Wellenlänge im Bereich von 905nm +- ca. 10nm.

7. Montagemodul (20) nach einem der vorangegangenen Ansprüche,
**dadurch gekennzeichnet,**
**dass** das optische Sensorsystem (30) wenigstens einen optischen Filter, insbesondere einen Infrarotfilter, aufweist für die optische Filterung eines ausgesendeten Laserlichtblitzes (122) und/oder der Reflexion des Laserlichtblitzes (122).

8. Montagemodul (20) nach einem der vorangegangenen Ansprüche,
**dadurch gekennzeichnet,**
**dass** das optische Sensorsystem (30) wenigstens einen Polarisator aufweist für die Polarisation eines ausgesendeten Laserlichtblitzes (122) und/oder der Reflexion des Laserlichtblitzes (122).

9. Montagemodul (20) nach einem der vorangegangenen Ansprüche,
**dadurch gekennzeichnet,**
**dass** das optische Sensorsystem (30) eine Optik aufweist für eine Aufweitung der gaußschen Verteilung der Intensität eines ausgesendeten Laserlichtblitzes (122), um die Ränder des Detektionsbereichs (150) mit ausreichend hoher Intensität zu versorgen.

10. Montagemodul (20) nach einem der vorangegangenen Ansprüche,
**dadurch gekennzeichnet,**
**dass** das optische Sensorsystem (30) eine zylindrische oder im Wesentlichen zylindrische Bauform aufweist.

11. Montagemodul (20) nach einem der vorangegangenen Ansprüche,
**dadurch gekennzeichnet,**
**dass** das optische Sensorsystem (30) ausgebildet ist für eine Überlagerung, insbesondere eine vollständige Überlagerung, des Detektionsbereichs (150) und/oder eines Betätigungsbereichs (160) mit einem ausgesendeten Laserlichtblitz (122).

12. Montagemodul (20) nach einem der vorangegangenen Ansprüche,
**dadurch gekennzeichnet,**
**dass** das optische Sensorsystem (30) eine Kontrollvorrichtung (100) mit einer Sendeeinheit (120) für das Aussenden eines Laserlichtblitzes () aufweist, wobei die Sendeeinheit (120) eine Ausrichtung mit einer Aussenderichtung (124) spitzwinklig zur Horizontalen (H), insbesondere mit einem Winkel größer als ca. 30° aufweist.

13. Montagemodul (20) nach einem der vorangegangenen Ansprüche,
**dadurch gekennzeichnet,**
**dass** das optische Sensorsystem (30) eine Kontrollvorrichtung (100) aufweist für eine Auswertung der Zeitdifferenz zwischen dem Aussenden eines Laserlichtblitzes (122) und dem Erkennen der Reflexion des Laserlichtblitzes (122) von dem Benutzer (10) auf den Abstand des Benutzers (10) zum optischen Sensorsystem (30).

14. Montagemodul (20) nach einem der vorangegangenen Ansprüche,
**dadurch gekennzeichnet,**
**dass** das Signal für die Durchführung wenigstens einer der folgenden Aktionen am Kraftfahrzeug (1) ausgelöst wird:
- Öffnen und/oder Schließen der Heckklappe des Kraftfahrzeugs (1)
- Öffnen und/oder Schließen einer Schiebetür des Kraftfahrzeugs (1)
- Öffnen und/oder Schließen einer Seitentür des Kraftfahrzeugs (1)

15. Montagemodul (20) nach einem der vorangegangenen Ansprüche,
**dadurch gekennzeichnet,**
**dass** das optische Sensorsystem (30) eine Kontrollvorrichtung (100) mit einer Detektionseinheit (110) für die Durchführung des Schrittes a), einer Sendeeinheit (120) für die Durchführung des Schrittes b) und einer Auswerteinheit (140) für die Durchführung des Schrittes c) aufweist, wobei vorzugsweise die Sendeeinheit (120) zumindest eine Laserlichtquelle (126) aufweist für das Aussenden eines Laserlichtblitzes (122), insbesondere für das gepulste Aussenden von einer Vielzahl von Laserlichtblitzen (122) hintereinander, und die Kontrollvorrichtung (100) weiter einer Empfangseinheit (130) aufweist für das Erkennen einer Reflexion des Laserlichtblitzes (122), und wobei insbesondere die zumindest eine Laserlichtquelle (126) neben der Empfangseinheit (130) angeordnet ist.

16. Montagemodul (20) nach Anspruch 15,
**dadurch gekennzeichnet,**
**dass** die Sendeeinheit (120) ausgebildet ist einen Laserlichtblitz (122) entlang von wenigstens zwei Aussenderichtungen (124) auszusenden, welche sich in einem Brennpunkt (B) treffen, der innerhalb des Detektionsbereichs (150), insbesondere innerhalb des Betätigungsbereichs (160), angeordnet ist.

17. Montagemodul (20) nach einem der vorangegangenen Ansprüche,
**dadurch gekennzeichnet,**
**dass** die Aussendung eines Laserlichtblitzes (122) in den Betätigungsbereich (160) erfolgt, welcher kleiner als der Detektionsbereich (150) innerhalb des Detektionsbereichs (150) ausgebildet ist.

18. Verfahren für das Auslösen eines Signals für die Durchführung einer Aktion an einem Kraftfahrzeug (1), aufweisend die folgenden Schritte:
a) Überwachen eines außerhalb des Kraftfahrzeugs (1) liegenden Detektionsbereichs (150), um die Nähe eines Benutzers (10) festzustellen, wobei das Überwachen kontinuierlich erfolgt, um zu erkennen, wenn ein Benutzer (10) in den Detektionsbereich (150) eintritt,
b) Im Falle eines Erkennens des Benutzers (10) in dem Detektionsbereich (150), Überwachen eines innerhalb des Detektionsbereichs (150) angeordneten Betätigungsbereichs (160), um festzustellen, ob der Benutzer (10) sich innerhalb des Betätigungsbereichs (160) befindet und
c) im Falle eines Erkennens des Benutzers (10) in dem Betätigungsbereich (160) Auslösen eines Signals für die Durchführung einer Aktion am Kraftfahrzeug (1).

19. Verfahren nach Anspruch 18, **dadurch gekennzeichnet, dass** für die Überwachung des Betätigungsbereichs (150) die folgenden Schritte ausgeführt werden:
a) Aussenden eines Laserlichtblitzes (122) innerhalb des Detektionsbereichs (150) und
b) Erkennen einer Reflexion des Laserlichtblitzes (122) von dem Benutzer (10),
wobei vorzugsweise das Verfahren für den Betrieb in einem Montagemodul (20) mit den Merkmalen eines der Ansprüche 1 bis 17 ausgebildet ist.

## Claims

1. Assembly module (20) for a motor vehicle (1), having an optical sensor system (30) which is suitable
a) to monitor a detection area (150) located outside the motor vehicle (1) to determine the proximity of a user (10),
b) in the event of detection of the user (10) in the detection area (150), monitoring an operating area (160) located within the detection area (150) to determine whether the user (10) is within the operating area (160); and
c) in the event of detection of the user (10) in the operating area (160), to trigger a signal for carrying out an action on the motor vehicle (1),
wherein the optical sensor system (30) is adapted to use less energy for monitoring the detection area (150) than for monitoring the operating area (160),
wherein low energy transmission or monitoring units which can be used for continuous operation are provided for carrying out step a),
and a unit within the optical sensor system (30) for step b) is formed with increased power consumption.

2. Assembly module (20) according to claim 1,
**characterized in**
**that** the optical sensor system (30) has a control device (100), which is designed with a detection unit (150) for monitoring the detection area (150), and preferably a transmitter unit (120) and a receiver unit (130) are provided for monitoring the operating area (160), and wherein a difference in the energy requirement is provided when carrying out the respective method step, wherein a reduced energy requirement is provided for the permanent monitoring when monitoring the detection area (150) in order to protect the battery of the vehicle (1), and for the necessary detail determination or fine positioning of the user (10) relative to the operating area (160), an increased energy requirement can be used, this being carried out only in individual situations as a function of the actual positioning of the user (10) relative to the detection area (150), the optical sensor system (30) having the control device (100) with the detection unit (110) for carrying out step a), the detection unit (110) having a photosensor for this purpose.

3. Assembly module (20) according to any one of the preceding claims,
**characterized in**
**that** the optical sensor system (30) is designed to emit a laser light flash (122) for monitoring the operating area (160) within the detection area (150) and to detect a reflection of the laser light flash (122) by the user (10).

4. Assembly module (20) according to any one of the preceding claims,
**characterized in**
**that** the optical sensor system (30) is designed to trigger a signal for starting an authentication check between an ID transmitter (13) and an access control system (14) of the motor vehicle (1) in the detection area (150) in the event of recognition of the user (10), and steps b) to c) are carried out only in the event of a positive authentication result.

5. Assembly module (20) according to any one of the preceding claims,
**characterized in**
**that** the optical sensor system (30) is designed to suppress steps b) to c) if no user (10) has been detected in the detection area (150).

6. Assembly module (20) according to any one of the preceding claims,
**characterized in**
**that** the optical sensor system (30) has a transmitter unit (120) for transmitting a laser light flash (122) with a wavelength in the infrared range, in particular with a wavelength in the range of 905 nm +- approx. 10 nm.

7. Assembly module (20) according to any one of the preceding claims,
**characterized in**
**that** the optical sensor system (30) has at least one optical filter, in particular an infrared filter, for the optical filtering of an emitted laser light flash (122) and/or the reflection of the laser light flash (122).

8. Assembly module (20) according to any one of the preceding claims,
**characterized in**
**that** the optical sensor system (30) has at least one polarizer for polarizing an emitted laser light flash (122) and/or the reflection of the laser light flash (122).

9. Assembly module (20) according to any one of the preceding claims,
**characterized in**
**that** the optical sensor system (30) has optics for widening the Gaussian distribution of the intensity of an emitted laser light flash (122) in order to supply the edges of the detection area (150) with sufficiently high intensity.

10. Assembly module (20) according to any one of the preceding claims,
**characterized in**
the optical sensor system (30) has a cylindrical or substantially cylindrical design.

11. Assembly module (20) according to any one of the preceding claims,
**characterized in**
**that** the optical sensor system (30) is designed for a superimposition, in particular a complete superimposition, of the detection area (150) and/or an operating area (160) with an emitted laser light flash (122).

12. Assembly module (20) according to any one of the preceding claims,
**characterized in**
**that** the optical sensor system (30) has a control device (100) with a transmitter unit (120) for the emission of a laser light flash (122), the transmitter unit (120) having an alignment with an emission direction (124) at an acute angle to the horizontal (H), in particular at an angle greater than approximately 30°.

13. Assembly module (20) according to any one of the preceding claims,
**characterized in**
**that** the optical sensor system (30) has a control device (100) for evaluating the time difference between the emission of a laser light flash (122) and the detection of the reflection of the laser light flash (122) from the user (10) on the distance of the user (10) to the optical sensor system (30).

14. Assembly module (20) according to any one of the preceding claims,
**characterized in**
**that** the signal for performing at least one of the following actions is triggered on the motor vehicle (1):
- opening and/or closing the tailgate of the motor vehicle (1)
- opening and/or closing of a sliding door of the motor vehicle (1)
- opening and/or closing a side door of the motor vehicle (1)

15. Assembly module (20) according to any one of the preceding claims,
**characterized in**
**that** the optical sensor system (30) has a control device (100) with a detection unit (110) for carrying out step a), a transmission unit (120) for carrying out step b) and an evaluation unit (140) for carrying out step c), preferably the transmission unit (120) having at least one laser light source (126) for emitting a laser light flash (122), in particular for the pulsed transmission of a plurality of laser light flashes (122) one after the other, and the control device (100) further comprises a receiving unit (130) for detecting a reflection of the laser light flash (122), and wherein in particular the at least one laser light source (126) is arranged next to the receiving unit (130).

16. Assembly module (20) according to claim 15,
**characterized in**
**that** the transmitter unit (120) is designed to emit a laser light flash (122) along at least two emitting directions (124) which meet at a focal point (B) which is arranged within the detection area (150), in particular within the operating area (160).

17. Assembly module (20) according to any one of the preceding claims,
**characterized in**
**that** a laser light flash (122) is emitted into the operating area (160), which is formed smaller than the detection area (150) within the detection area (150).

18. Method for triggering a signal for performing an action on a motor vehicle (1), comprising the following steps:
a) monitoring a detection area (150) located outside the motor vehicle (1) to determine the proximity of a user (10),
wherein the monitoring is continuous to detect when a user (10) enters the detection area (150),
b) in the event of detection of the user (10) in the detection area (150), monitoring an operating area (160) located within the detection area (150) to determine whether the user (10) is within the operating area (160); and
c) in the event of detection of the user (10) in the operating area (160), trigger a signal for carrying out an action on the motor vehicle (1).

19. Method according to claim 18,
**characterized in**
**that** the following steps are carried out for monitoring the operating area (160):
a) emitting a laser light flash (122) within the detection area (150), and
b) detecting a reflection of the laser light flash (122) from the user (10),
wherein preferably the method is designed for operation in an assembly module (20) having the features of one of claims 2 to 17

## Revendications

1. Module de montage (20) pour un véhicule automobile (1), comportant un système de capteur optique (30) qui est adapté
a) à surveiller une zone de détection (150) située à l'extérieur du véhicule automobile (1) pour déterminer la proximité d'un utilisateur (10),
b) en cas de détection de l'utilisateur (10) dans la zone de détection (150), surveillance d'une zone d'actionnement (160) située dans la zone de détection (150) pour déterminer si l'utilisateur (10) se trouve dans la zone d'actionnement (160) ; et
c) en cas de reconnaissance de l'utilisateur (10) dans la zone d'actionnement (160), pour déclencher un signal permettant d'effectuer une action sur le véhicule automobile (1),
dans lequel le système de capteurs optiques (30) est adapté pour utiliser moins d'énergie pour la surveillance de la zone de détection (150) que pour la surveillance de la zone d'actionnement (160),
où des unités de transmission ou de surveillance à faible consommation d'énergie pouvant être utilisées pour un fonctionnement continu sont prévues pour la réalisation de l'étape a),
et une unité au sein du système de capteur optique (30) pour l'étape b) est formée avec une consommation d'énergie accrue.

2. Module de montage (20) selon la revendication 1,
**caractérise en ce**
**que** le système de capteur optique (30) présente un dispositif de commande (100) qui est conçu avec une unité de détection (150) pour la surveillance de la zone de détection (150), et de préférence une unité d'émission (120) et une unité de réception (130) sont prévues pour la surveillance de la zone d'actionnement (160), et dans lequel une différence dans le besoin en énergie est prévue lors de l'exécution de l'étape de procédé respective, dans lequel un besoin en énergie réduit est prévu pour la surveillance permanente lors de la surveillance de la zone de détection (150) afin de protéger la batterie du véhicule (1), et pour la détermination des détails nécessaires ou Positionnement fin de l'utilisateur (10) par rapport à la zone d'actionnement (160), un besoin accru en énergie peut être utilisé, celui-ci n'étant réalisé que dans des situations individuelles en fonction du positionnement réel de l'utilisateur (10) par rapport à la zone de détection (150), le système de capteurs optiques (30) comportant le dispositif de commande (100) avec l'unité de détection (110) pour réaliser l'étape a), l'unité de détection (110) comportant un photocapteur à cet effet.

3. Module de montage (20) selon l'une quelconque des revendications précédentes,
**caractérise en ce**
**que** le système de capteur optique (30) est conçu pour émettre un flash de lumière laser (122) pour surveiller la zone d'actionnement (160) dans la zone de détection (150) et pour détecter une réflexion du flash de lumière laser (122) par l'utilisateur (10).

4. Module de montage (20) selon l'une quelconque des revendications précédentes,
**caractérise en ce**
**que** le système de capteur optique (30) est conçu pour déclencher un signal de démarrage d'un contrôle d'authentification entre un émetteur d'identification (13) et un système de contrôle d'accès (14) du véhicule automobile (1) dans la zone de détection (150) en cas de reconnaissance de l'utilisateur (10), et les étapes b) à c) ne sont exécutées qu'en cas de résultat d'authentification positif.

5. Module de montage (20) selon l'une quelconque des revendications précédentes,
**caractérise en ce**
**que** le système de capteur optique (30) est conçu pour supprimer les étapes b) à c) si aucun utilisateur (10) n'a été détecté dans la zone de détection (150).

6. Module de montage (20) selon l'une quelconque des revendications précédentes,
**caractérise en ce**
**que** le système de capteur optique (30) comporte une unité d'émission (120) pour la transmission d'un flash de lumière laser (122) avec une longueur d'onde dans le domaine infrarouge, en particulier avec une longueur d'onde dans la plage de 905 nm +- environ 10 nm.

7. Module de montage (20) selon l'une quelconque des revendications précédentes,
**caractérise en ce**
**que** le système de capteur optique (30) comporte au moins un filtre optique, en particulier un filtre infrarouge, pour le filtrage optique d'un flash de lumière laser émis (122) et/ou la réflexion du flash de lumière laser (122).

8. Module de montage (20) selon l'une quelconque des revendications précédentes,
**caractérise en ce**
**que** le système de capteur optique (30) comporte au moins un polariseur pour polariser un flash de lumière laser émis (122) et/ou la réflexion du flash de lumière laser (122).

9. Module de montage (20) selon l'une quelconque des revendications précédentes,
**caractérise en ce**
**que** le système de capteur optique (30) possède une optique permettant d'élargir la distribution gaussienne de l'intensité d'un flash de lumière laser émis (122) afin d'alimenter les bords de la zone de détection (150) avec une intensité suffisamment élevée.

10. Module de montage (20) selon l'une quelconque des revendications précédentes,
**caractérise en ce**
**que** le système de capteur optique (30) a une forme cylindrique ou sensiblement cylindrique.

11. Module de montage (20) selon l'une quelconque des revendications précédentes,
**caractérise en ce**
**que** le système de capteurs optiques (30) est conçu pour une superposition, en particulier une superposition complète, de la zone de détection (150) et/ou d'une zone d'actionnement (160) avec un flash de lumière laser émis (122).

12. Module de montage (20) selon l'une quelconque des revendications précédentes,
**caractérise en ce**
**que** le système de capteur optique (30) comporte un dispositif de commande (100) avec une unité d'émission (120) pour l'émission d'un flash de lumière laser (122), l'unité d'émission (120) présentant une orientation avec une direction d'émission (124) sous un angle aigu par rapport à l'horizontale (H), en particulier sous un angle supérieur à environ 30°.

13. Module de montage (20) selon l'une quelconque des revendications précédentes,
**caractérise en ce**
**que** le système de capteur optique (30) comporte un dispositif de commande (100) pour évaluer la différence de temps entre l'émission d'un flash de lumière laser (122) et la détection de la réflexion du flash de lumière laser (122) de l'utilisateur (10) sur la distance de l'utilisateur (10) au système de capteur optique (30).

14. Module de montage (20) selon l'une quelconque des revendications précédentes,
**caractérise en ce**
**que** le signal pour effectuer au moins une des actions suivantes est déclenché sur le véhicule automobile (1) :
- ouverture et/ou fermeture du hayon du véhicule automobile (1)
- ouverture et/ou fermeture d'une porte coulissante d'un véhicule automobile (1)
- ouverture et/ou fermeture d'une porte latérale du véhicule automobile (1)

15. Module de montage (20) selon l'une quelconque des revendications précédentes,
**caractérise en ce**
**que** le système de capteur optique (30) présente un dispositif de commande (100) avec une unité de détection (110) pour la réalisation de l'étape a), une unité d'émission (120) pour la réalisation de l'étape b) et une unité d'évaluation (140) pour la réalisation de l'étape c), l'unité d'émission (120) présentant de préférence au moins une source de lumière laser (126) pour l'émission d'un flash de lumière laser (122), en particulier pour la transmission pulsée de plusieurs flashs de lumière laser (122) l'un après l'autre, et le dispositif de commande (100) comprend en outre une unité de réception (130) pour la détection d'une réflexion du flash de lumière laser (122), et dans lequel en particulier la au moins une source de lumière laser (126) est disposée à côté de l'unité de réception (130).

16. Module de montage (20) selon la revendication 15,
**caractérise en ce**
**que** l'unité d'émission (120) est conçue pour transmettre un flash de lumière laser (122) le long d'au moins deux directions d'émission (124) qui se rencontrent en un point focal (B) qui est disposé dans la zone de détection (150), en particulier dans la zone d'actionnement (160).

17. Module de montage (20) selon l'une quelconque des revendications précédentes,
**caractérise en ce**
**qu'**un flash de lumière laser (122) est émis dans la zone d'actionnement (160), qui est formée plus petite que la zone de détection (150) à l'intérieur de la zone de détection (150).

18. Procédé de déclenchement d'un signal pour effectuer une action sur un véhicule automobile (1), comprenant les étapes suivantes :
a) surveiller une zone de détection (150) située à l'extérieur du véhicule automobile (1) pour déterminer la proximité d'un utilisateur (10),
où la surveillance est continue pour détecter quand un utilisateur (10) entre dans la zone de détection (150),
b) en cas de détection de l'utilisateur (10) dans la zone de détection (150), surveillance d'une zone d'actionnement (160) située dans la zone de détection (150) pour déterminer si l'utilisateur (10) se trouve dans la zone d'actionnement (160) ; et
c) en cas de reconnaissance de l'utilisateur (10) dans la zone d'actionnement (160). déclencher un signal permettant d'effectuer une action sur le véhicule automobile (1),

19. Procédé selon la revendication 18, **caractérisée en ce que** les étapes suivantes sont effectuées pour la surveillance de la zone d'actionnement (160) :
a) transmettre un flash de lumière laser (122) dans la zone de détection (150), et
b) détecter d'une réflexion du flash de la lumière laser (122) de l'utilisateur (10),
dans lequel, de préférence, la méthode est conçue pour fonctionner dans un module de montage (20) présentant les caractéristiques de l'une des revendications 2 à 17
